# EUROPEAN PATENT SPECIFICATION

(11) **EP 4 384 930 B1**
(45) Date of publication and mention of the grant of the patent: **08.10.2025**
(21) Application number: 22772795.5
(22) Date of filing: 12.08.2022
(51) Int. Cl.: G06F 21/55

(54) **AUTOMATED METHOD AND SYSTEM FOR DETERMINING AN EXPECTED DAMAGE OF AN ELECTRICALLY POWERED VEHICLE**
AUTOMATISIERTES VERFAHREN UND SYSTEM ZUR BESTIMMUNG EINER ERWARTETEN BESCHÄDIGUNG EINES ELEKTRISCH ANGETRIEBENEN FAHRZEUGS
PROCÉDÉ ET SYSTÈME AUTOMATISÉS PERMETTANT DE DÉTERMINER UN DOMMAGE ATTENDU D'UN VÉHICULE À PROPULSION ÉLECTRIQUE

(30) Priority: 13.08.2021 CH 0701572021
(43) Date of publication of application: 19.06.2024
(73) Proprietor: Swiss Reinsurance Company Ltd., 8022 Zürich (CH)
(72) Inventor: ROSENBAUM, Hans Felix, 8038 Zürich (CH)
(74) Representative: Leimgruber, Fabian Alfred Rupert
(86) International application number: PCT/EP2022/072734
(87) International publication number: WO 2023/017182

(56) References cited:
- US-A1- 2019 102 840
- HALIM ZAHID ET AL: "Artificial intelligence techniques for driving safety and vehicle crash prediction", ARTIFICIAL INTELLIGENCE REVIEW, SPRINGER NETHERLANDS, NL, vol. 46, no. 3, 23 February 2016 (2016-02-23), pages 351 - 387, XP036045645, ISSN: 0269-2821, [retrieved on 20160223], DOI: 10.1007/S10462-016-9467-9
- PÜTZ FABIAN ET AL: "Driving to a future without accidents? Connected automated vehicles' impact on accident frequency and motor insurance risk", ENVIRONMENT SYSTEMS AND DECISIONS, SPRINGER US, BOSTON, vol. 39, no. 4, 10 August 2019 (2019-08-10), pages 383 - 395, XP036948503, ISSN: 2194-5403, [retrieved on 20190810], DOI: 10.1007/S10669-019-09739-X
- HOSSAIN MOINUL ET AL: "Real-time crash prediction models: State-of-the-art, design pathways and ubiquitous requirements", ACCIDENT ANALYSIS & PREVENTION, vol. 124, 8 January 2019 (2019-01-08), pages 66 - 84, XP085611601, ISSN: 0001-4575, DOI: 10.1016/J.AAP.2018.12.022

## Description

### Field of the Invention

The present invention relates to automated systems and methods for determining an expected damage of an at least partially electrically powered vehicle based on existing damage characteristics of combustion engine vehicles using a forward looking modelling structure. In particular the present invention relates to systems and methods for determining an expected damage of an at least partially electrically powered vehicle and measuring and/or allocating a risk of loss for damaged electric vehicles, in particular the probability of occurrence of a physical impacting loss event to an electric vehicle. In particular, it relates to automated risk-transfer technology, systems and methods for allocation of risk in damage replacement of electrically powered vehicles. Even more particularly, the invention relates to automated systems and methods measuring and/or generating rating factors for Motor Third Party Liability (MTLP) insurance systems and/or Motor Own Damage (MOD) insurance systems.

### Background of the Invention

The technical field of electric vehicles, such as road and rail vehicles, surface and underwater vessels, electric aircraft and electric spacecraft, is now in its third century of development and is likely to advance rapidly in the coming years. Electrically powered vehicles generally use one or more electric motors for propulsion, the electric motor, for example, being powered through a collector system by electricity from off-vehicle sources (as e.g. used by Plug-in Hybrid Electric Vehicles (PHEVs)), or may be self-contained with a battery, solar panels, fuel cells or an electric generator to convert fuel to electricity.

Electric trains are widely used, and modern high-speed trains are competitive with air travel in terms of journey speed over shorter land routes. In energy terms they use less than 10% of the fuel per passenger kilometer than air transport. Though, electric road vehicles have not achieved the commercial success that international combustion engine vehicles have, battery technology has now developed to a point where electric vehicles are being commercially produced. Further battery developments are likely to accelerate the use of electric road vehicles in the next years. Some electric vehicles such as golf buggies and personnel carriers, e.g. used in airports, have already become well established. Electric bicycles are becoming increasingly popular and are considered as one of the fastest ways to move about crowded cities.

Further, potential environmental benefits which can result from the use of electric vehicles are substantially when the vehicles use electricity that is generated from sources which use highly efficient modern generating stations or which use nuclear or sustainable energy. Environmental benefits include zero exhaust emissions on the vicinity of the vehicles, reduced dependence on fossil fuels and reduced overall carbon emissions. This is important, since the ever rapidly growing transportation sector consumes about 49% of oil resources. Following the current trends of oil consumption and crude oil sources, the world's oil resources are predicted to be depleted by 2038. Therefore, replacing the non-renewable energy resources with renewable energy sources and use of suitable energy-saving technologies seems to be mandatory. Therefore, electrically powered vehicles or in short electric vehicles (EVs)are a potential solution for alleviating the traffic-related environmental problems. For example, the EU commission hold that the EU's goal of climate neutrality by 2050 cannot be reached without introducing very ambitious measures to reduce transport's reliance on fossil fuels. Thus, the European Union aims to have at least 30 million zero-emission vehicles on its roads by 2030, as it seeks to steer countries away from fossil fuel-based transport. So it is clear, that electric cars will become significantly important the next few years.

Taking the power supplement and propulsion devices into account, electrically powered vehicles could be classified into three different types: pure electrical vehicle (PEV), hybrid electrical vehicle (HEV) and fuel cell electrical vehicle (FCEV). Table 1 shows a brief classification of different EVs. The PEV is purely fed by electricity from the power storage unit, while the propulsion of PEV is solely provided by an electric motor. The driving system of HEV combines the electric motor and the engine, while the power sources involve both electricity and gasoline or diesel. FCEV is driven by an electric motor and could be directly or indirectly powered using hydrogen, methanol, ethanol or gasoline.

**Table 1: Comparison of different electric vehicles**

| ***Types*** | ***PEV*/*BEV*** | ***HEV*** | ***FCEV*** |
|---|---|---|---|
| Drive section | Electric machine | Electrical machine, internal combustion engine (ICE) | Electrical machine |
| Energy sources | Battery, ultracapacitor | Battery, ultracapacitor, ICE unit | Fuel cell |
| Energy supplements | Electricity and power system | Electricity and power system, gasoline station | Hydrogenide |

In PEV, also referred as battery electric vehicle (BEV), energy storage capacity fully depends on the battery technology. Zero discharge emission of PEV should be a significant advantage because the electrical energy is solely supplied from the vehicle-mounted battery. On the other hand, the limitations on the present status of the on-board battery technology of PEV make it less attractive than combustion engine vehicles under the same economic and driving requirements. Batteries with high power densities but low energy densities result in longer charging time - even with fast charging technologies, one hour to several hours for full charging is necessary. Thus, main challenges of the PEV are limited driving range, high initial cost and lack of charging infrastructures. For the practical implementation, the size and location of the battery inside the PEV should also be standardized.

FCEVs are attractive because of zero roadside emissions. Even taking the overall emissions into account, which include the emission from chemical plants and on-road reformers, the FCEV seems still competitive. Fuel cell (FC) is the main power supplier and the critical technology for FCEV is an electrochemical device that produces DC electrical energy through a chemical reaction. There are five main components in FC: anode, an anode layer, electrolyte, cathode and a cathode catalyst layer. With suitable parallel/series connection of FC sources, the required amount of power can be produced to drive the car. In terms of driving range, it is comparable to ICEV, thus resulting in a wide range of application of FCs from small scale plants of the order of 200 W to small power plants of the order of 500 kW. However, the high initial cost and lack of refueling stations are still regarded as significant challenges for the success of FCEV. Also, the supply electricity continuity of FCs is less reliable than conventional battery used in EVs.

The crucial advantage of BEV and FCEV is the 'zero emission' and hence reduced air pollution. However, the 'zero emission' of BEV and FCEV is not absolute considering the emissions during the whole processing. However, "what is critical as the main pollution-contributor and how" are the topics that are hardly discussed. For example, the pollution-contributors include chemical contamination when producing the fuel cell and the battery (or the electrochemical plant for FCs), the emissions during the vehicle manufacture, the pollution from scrap battery processing, etc.

The HEV combines the properties of combustion engine vehicles and battery electrical vehicles. Driving power sources of HEV include both gasoline/diesel and electricity; the propulsion relies on the engine and electric motor. According to different refueling or recharging measures, HEVs can be classified as either conventional HEVs or grid-able HEVs. Based on levels of the combination, the conventional HEV could be further developed to three types: micro, mild and full HEV. The grid-able HEV could be either plug-in hybrid electric vehicle (PHEV) or range-extended electric vehicle (REV).

As both electricity and petrol propel the HEV, the driving range of HEV is comparable to that of ICEV. The economic practicality of HEV seems to take more advantages than PEV due to the status of present battery technology. However, the need for engine and gasoline is not eliminated in HEV - so there is no zero emission. The combination of electric generator and engine increases the complexity of the manufacturing process and the initial cost. Therefore, the challenges for HEV are focusing on coordinating these two propulsion devices to achieve an optimal efficiency while reducing the design complexity at the same time (Wong, 2013). Going through the overall development of EVs and considering both the economy and the technology, HEV has the most potential to develop and dominate the next few decades.

Taking the energy sources into account, electrically powered vehicles are fully or partially energized from the batteries, which themselves are directly or indirectly charged from either a power station and/or electrochemical reactions. Therefore, various renewable energy sources should be used to improve the overall emission of electrically powered vehicles.

Battery electric vehicles (BEVs) and plug-in hybrid electric vehicles (PHEVs) are gradually penetrating the EU market. There has been a steady increase in the number of new electrically powered vehicle registrations annually, from 700 units in 2010 to about 550,000 units in 2019 (3.5% of new registrations). In 2020, electric car registrations surged, accounting for 11% of newly registered passenger cars. BEVs accounted for 6% of total new car registrations in 2020, while PHEVs represented 5%. In 2020 almost 30,000 electric vans were sold, representing 2.2% of the market share and an increase of around 0.8 percentage points from 2019. The majority of electric vans sold were BEVs. In 2020, the share of electric vehicles (BEVs and PHEVs) in national new car registrations increased in all EU countries (EU-27, Iceland, Norway and the United Kingdom) compared with 2019. The highest shares were found in Norway (75%), Iceland (46%), Sweden (33%) and the Netherlands (28%). Germany, France and the United Kingdom accounted for about 60% of BEV registrations, with the numbers tripling compared with 2019. In Norway, BEVs accounted for 54% of new car sales in 2020, increasing from 30% in 2018. PHEV sales were highest in Sweden (23%), and Norway and Iceland (20%).

While the general driving experience with an electrically powered vehicle and a combustion engine vehicle is very similar, there are some significant differences between steering an electrical vehicle or a combustion engine vehicle. This leads to unfamiliar traffic situations for the drive of an electrically powered vehicle and other road users.

First, electrically powered vehicles provide quieter and smoother rides than combustion engine vehicle. In combustion engine vehicles, the controlled explosion takes place internally which generates vibration and noise. In an electrically powered vehicle there is little friction between the components which results in a strong reduction of sounds. While this is pleasant for the driver and its vicinity, it also poses a risk for other road user who are used to hearing an approaching car long before it gets close.

Second, electrically powered vehicles can often be constructed by simpler structures and they are much quicker than the combustion ones. Electrically powered vehicles generate much more torque particularly at low rpms (rpm: revolutions per minute) than combustion vehicles, which is important because torque is what drives the vehicle forward. Combustion (CE) cars need revolutions to generate torque. Furthermore, an electric vehicle's motor eliminates the need for a traditional transmission in many modern designs. The power goes straight to the wheels for instant acceleration. In a petrol-powered cars, the engine has to route the power first to the transmission and then to the wheels, which components collectively are known as the drivetrain. Further, the transmission parts also need to be accelerated, which reduces acceleration overall. But the core is the instant availability to the torque. The instant torque and the simplified powertrain are the two factors that enable an electric vehicle to take off from a stop much faster than a gas vehicle of comparable power specification. Other road users and drivers of electrically powered vehicles themselves are often not yet used to this kind of different driving behavior compared to what they know about combustion engine vehicles. This leads to an increase in accidents and bodily injury and even the loss of vehicles involved in an accident.

Third, the braking characteristics are different as well. Electrically powered vehicles use regenerative braking to quickly slow down the vehicle. Regenerative braking means the electric motor is operated in reverse, thereby applying a braking force through electromagnetism. This recaptures some of the vehicle's kinetic energy by charging the battery. Under normal driving conditions, an electrically powered vehicle engages regenerative braking to slow the vehicle when the driver removes their foot from the accelerator without the need of pushing the brake pedal. Other drivers behind an electrical vehicle may not expect such a quick slow down, particularly when the braking lights of the electrical vehicle are not activated. Again, this poses a risk for other road users to measure and quantify the risks of electrically powered vehicles. It is hard to predict such risks or to take measures to avoid such risks.

In summary, electrically powered motor vehicles, as e.g. cars, are different to petrol, diesel and other kind of vehicles in respect to their accident event characteristics and occurrence frequencies. The electric motor has the characteristics of torque and power that are quite different from the internal combustion engines. Safe and energy efficient electric driving vehicle requires appropriate skills. For electric vehicles there is no room for everyday driving style as it is with petrol vehicles. Especially the charging should be done properly and with the necessary discipline. Thus, apart from different driving characteristics during operation, electric/hybrid vehicles have a number of other safety concerns not associated in this or at least in a different magnitude with conventional vehicles including electrocution, explosion, electrolyte spillage, and/or fire. There have been numerous real-world examples of electric vehicles catching on fire after a crash and in the garages where they were being stored; in some cases, this may have been while the vehicle was being charged. Thus, there is a real need for an automated prediction and forecast system which is based on real-world measuring parameter values, and which allow a measurement-based forecast of occurrence probabilities of accident events associated with electric vehicles.

The prior art document US 2019/0102840 A1 shows an electronic system for dynamic measuring and recognition of maneuvers of a driver during driving a motor vehicle, the automated recognition being solely based on smartphone telemetry. In particular, the system performs driver's maneuver recognition based on dynamically measured sensory data of smartphone sensors, the measured telemetry data being limited to dynamically captured measuring data from the accelerometer sensor and the global positioning system (GPS) sensor and/or the gyroscope sensor of the smartphone. The axes of the smart-phone may be moving independently relative to the axes of the vehicle and thus do not need to be aligned with the axes of the vehicle. Driver behaviors and operational parameters are automatically measured and discriminated, based on automatically individuated and measured driver maneuvers within various measured to vehicle trajectories, and an output signal is generated based upon derived risk measure parameters and/or crash attitude measure parameters. The system can use score-driven, especially risk-score driven, operations associated with motor vehicles. Further the prior art document *"*Artificial intelligence techniques for driving safety and vehicle crash prediction" by Z. Halim et al., Artif Intell Rev. 2016, 46 p. 351-387, discloses various systems for detection of unsafe driving patterns of a vehicle used to forecast accidents. Different artificial-intelligence-based are discussed for the detection of unsafe driving style with corresponding crash predictions. These are compared to known, prior art statistical methods and systems for predicting accidents associated with driving features in terms of required datasets and prediction performance. Finally, the prior art document *"*Driving to a future without accidents? Connected automated vehicles' impact on accident frequency and motor insurance risk" by F. Pütz et al. Environment Systems and Detections, 2019 39, p. 383-395 discloses a system to measure the impact of automation feature of connected automated vehicles (CAV) having predetermined action patterns. In particular The system allows to assess the impact of progressive vehicle automation (increasing ADAS feature activation) and interconnectedness on the risks covered under motor third-party and comprehensive insurance policies. The document also discloses an assessment of potential emerging risks such as the risk of cyber-attacks.

### Summary of the Invention

It is an object of the present invention to provide a method and a system for determining an expected damage or a damage potential of an at least partially electrically powered vehicle that allows for a simple analysis of a damage to be expected, is based on easily measurable technical parameters, supports reliable risk assessment and can be adjusted to changing vehicle or driving conditions.

It is to be noted that the present invention is not only about MOD (Motor Own Damage) risk, but also provides automation for risk assessment and/or measurement of MTPL (Motor Third Party Liability) risks, and third party car risks involved

It is an object of the present invention to provide a method and a system for determining an expected damage or a damage potential of an at least partially electrically powered vehicle that allows for a simple analysis of a damage to be expected, is based on easily measurable technical parameters, supports reliable risk assessment and can be adjusted to changing vehicle or driving conditions.

It is to be noted that the present invention is not only about MOD (Motor Own Damage) risk, but also provides automation for risk assessment and/or measurement of MTPL (Motor Third Party Liability) risks, and third party car risks involved in the crash as well. Additionally, it also operates for Bodily Injury (BI) risks, i.e. measurements of predictive future occurrence rates of physically occurring BI events.

It is a further object of the present invention to provide a method, and a system for carrying out the method, for measuring and/or allocating risk measures of loss for a replacement cost of an electrically powered vehicle and/or parts of such electric vehicle, as e.g. on-board electric energy storage devices and batterie, damaged as a result of the occurrence of a loss impacting event, such as a collision involving an electrically powered vehicle leading to the loss of the vehicle.

According to the present invention, these objects are achieved, particularly, by the features of the independent claims. In addition, further advantageous embodiments and applications can be derived from the dependent claims and the related descriptions.

According to the present invention, the abovementioned objects are particularly achieved by the inventive automated prediction or measuring system and method for such an automated system for measuring and/or allocating probability/risk measurands for the occurrence of accident events causing a damage impact with a measurable impact strength (severity) within a future time-frame to at least partially electrically powered vehicles, in that first sets of input parameters from combustion engine vehicles are captured by the system via a data interface and transmitted to a forward looking modelling structure of a prediction device, each first set of input parameters at least comprising vehicle characteristics parameters and damage impact strength and/or damage characteristics parameter pattern of at least one measured accident event of the combustion engine vehicle, in that second sets input parameters are captured by the system via a data interface and transmitted to the forward looking modelling structure of the prediction device, each second set of input parameters at least comprising vehicle characteristics parameters of the electrically powered vehicle, in that the prediction device automatically generates and assigns a modification factor to at least one of the electrically powered vehicles by means of the forward looking modelling structure as output signaling based on the first and second sets of input parameters, and in that a vehicle-specific, aggregated damage risk measure for at least one electrically powered vehicle is determined and provided as output signaling of a signal generator based on the aggregated damage risk measures of one or more combustion engine vehicle and the modification factor assigned to the at least one electrically powered vehicles.

An automated system for determining an expected damage of an at least partially electrically powered vehicle according to the invention for implementing above described method is based on the damage characteristic parameter pattern of a combustion engine vehicle measured in the past, i.e. historically measured damage characteristic parameter pattern, and uses the forward looking modelling structure. The automated system comprises a modelling unit for implementing the forward looking modelling structure and a data storage for data of the historically measured damage characteristic parameter pattern of combustion engine vehicles. To allow actual measurements, the invention modifies prediction of accident severity and frequency, which may also include not historically measured damages. The latter is used to set the parameters, but this is not a model by itself.

In summary, the automated method and system according to the invention allows to measurably derive from captured technical feature pattern of combustion engine vehicles and the damage behavior connected to these technical features and/or driver characteristic parameter values the damage impact measures to the electrically powered vehicles to be measured. Further, the automated method and system according to the invention allows to measurably derive aggregated damage impact measures added up based on measured probability values or occurrence frequencies associated with an accident event of a certain impact severity and future time-frame. The technical feature pattern as input pattern to the modelling module however also take into account technical features specific for electrically powered vehicles, which contribute to the damage behavior of electrically powered vehicles.

The invention has inter alia the advantage that, due to the large number of measurable combustion engine vehicles, a large data-pool of measured values capturing parameters of actually existing motor vehicles can be established by collecting corresponding measuring parameter values. Such measured values for example determine technical characteristics of the vehicles, like weight, power, robustness or age. Such parameters can be defined as tool parameters of the vehicles. Further, a large pool of measured values of damage parameters of damaged combustion engine vehicles exists or can be established by measuring, which determine specifics of a damage, like a damage to the vehicle body, the engine, the transmission and wheels or the total loss of the vehicle. The damage parameters can be summarized to a damage level. The damage level is associated to the technical characteristics, respectively tool parameters, of the combustion engine vehicle. The technical parameters and the damage parameters represent characteristics of an existing damage or existing damage characteristics, respectively. They serve as the basis for determining a damage of a vehicle comprising very similar technical parameters. This results in a damage model for combustion engine vehicles that can be used to simulate and reliably predict a damage potential or for example the costs for a loss of such vehicles.

The number of electrically powered vehicles in use is much smaller than that of combustion engine vehicles. Therefore, the number of damaged electrically powered vehicles is even smaller and so are measurements of the damage of such vehicles. Nevertheless, values describing technical parameters of an electrically powered vehicle exist or can be established by measuring. Such parameters describe the same technical characteristics as used for the combustion engine vehicles, like weight, power or robustness. Again, these parameters can be defined as tool parameters of electrically powered vehicles for improving the accuracy of the forward looking modelling structure and/or damage model structure by a loop-back feed (supervised learning). Additionally, parameter values for important specifics of electrically powered vehicles, which are less relevant for combustion engine vehicles but are known to contribute to the damage potential of electrically powered vehicles, can be established by measuring. Such parameters can be defined as additional risk parameters or risk drivers, which provide EV-specific information. These are for example the noise or the acceleration potential of the electrically powered vehicle, as e.g. battery type vehicles.

The forward looking modelling structure allows to combine the tool parameters and the risk drivers of an electrically powered vehicle to determine a modification factor based on the measured parameters of the electrically powered vehicle. Further, the tool parameters of the electrical vehicle can e.g. be compared to the tool parameters of combustion engine vehicles to identify a close match between these vehicles and identify the damage characteristics of the combustion engine vehicle. The modification factor of the electrical vehicle is automatically applied to the damage characteristics to define a potential future damage of the electrically powered vehicle and for example costs related to such an expected damage. This allows to look forward and anticipate a damage of an electrically powered vehicle and damage caused by the EV and determine necessary measures like implementing damage reduction or damage avoiding technologies, defining insurance fees or user trainings.

The automated method and system according to the present invention allows for forecasting or predicting a damage or an aggregated damage to be expected for the electrically powered vehicle. The assessment is based on technical values, which are measurably available for combustion engine vehicles and for electrically powered vehicles and extends the use of the measuring results to provide a reliable damage prediction. The method and system support the avoidance of technical failure of electrically powered vehicles and assist in preventing traffic accidents, e.g. by allowing to improve appropriate assistance systems to avoid the occurrence of the accident event etc.. Further, they foster a cost efficient use of electrically powered vehicles, which helps encouraging users to transfer to electrically powered vehicle and decreasing environmental impact. Also, the method and the system allow for assessing costs of damages or loss of vehicles, that potentially accrue in the future, which is helpful for developing accurate financing and insurance means. Thus, an additional efficiency also comes from this, because of the reduced uncertainty of accident frequency and severity, the uncertainty surcharge can be reduced.

The technical input parameters can be any type of measurable value or technical characteristics of a vehicle, which defines and allow to capture by physical measurands performance characteristics of the vehicle. Particularly, the technical input parameters may describe performance characteristics that may contribute to potentially damage impacting events while using the vehicle. These are for example technical characteristics describing the speed or acceleration potential of a vehicle, the technical failure potential or the accident preventing capacity.

In one variant of the automated method according to the present invention, the at least one first set of input parameters describing the combustion engine vehicle indicates a maximum power capacity, a model year, a vehicle make and/or an acceleration capacity. Further, the at least one first set of input parameters can be a damage factor of the combustion engine vehicle, that represents a combination of technical input parameters. Advantageously, the method comprises a damage model structure, which generates the damage factor allocated to said at least one first set of input parameter to indicate a damage potential for the combustion engine vehicle. The damage factor reflects the performance behavior of a combustion engine vehicle that is related to a potential of a car damage or loss. The damage factor can also include the damage strength (severity) of a combustion engine vehicle correlated to the one of the parameters of the first set of input parameters. This way, the damage factor can summarize all the information about existing damage characteristics as just one indicator. The damage factor may indicate a damage potential analyzed by statistical assessment of existing damage measurements and technical values of vehicles in real world scenarios and by simulating a damage scenario for an identical or comparable vehicle in the future. Advantageously, the damage model structure is a component of the forward looking modelling structure, or the damage factor may be entered as input to the forward looking modelling structure, to determine the modification factor or an electrically powered vehicle.

Further, the at least one second set of input parameters of the electrically powered vehicle includes a maximum power capacity and/or a model year and/or a vehicle make and/or an acceleration capacity of the electrically powered vehicle. As for the combustion engine vehicle, these parameters reflect the contribution potential of an electrically powered vehicle to a vehicle damage or loss. The maximum power capacity, the model year, the vehicle make, and the acceleration capacity are commonly used parameters for indicating the performance of vehicles and methods for measuring and indicating these parameters are well established. They are tool parameters of the electrically powered vehicles as described above.

In a further variant of the automated method according to the present invention, a damage driver is determined as a damage influencing factor potentially contributing to a damage of the electrically powered vehicle in case of a loss impacting event. The damage drivers of electrically powered vehicles stand for risk factors that particularly apply to electric cars. They are contributors to an occurrence of a risky situation when using the electrically powered vehicle. They represent an additional damage potential for electrically powered vehicles compared to combustion engine vehicles. For the method of the present invention a damage driver is particularly represented by a noise level, an acceleration capacity and/or a weight of the electrically powered vehicle. For example, the measurement of noise of the electrically powered vehicle can e.g. be an indicator for an increased risk because the electrically powered vehicle is difficult to be heard by other road user, which results in less attention to the traffic situation. Typically, the more noise, the lower the accident probability. The value of the acceleration capacity of electrically powered vehicles indicates an increased risk because drivers of the electrically powered vehicles or other road users are not used to the fast acceleration of such cars and misjudge traffic situations.

The human drivers can be measured for a specific electrically powered vehicle, a model of an electrically powered vehicle or a category of electrically powered vehicles, respectively. Two or more damage driver parameters for one vehicle can be combined to a damage driver rating. The damage drivers or the damage driver rating can be seen as third technical input parameters that are used by the forward looking modelling structure to generate the modification factor.

It is emphasized that the technical parameters of the combustion engine vehicles or of the electrically powered vehicles do not always need to be measured for each individual vehicle. It can typically be sufficient to collect the measured parameter values for one example of a vehicle type or model. These values can serve as the basis for determining the expected damage for other example vehicles of the same type or model. The measurement or assessment of the parameter values can be gathered for example from the vehicle manufacturer or a third party evaluating the vehicles of a manufacturer. In particular, the parameter measures can be obtained from reports or catalogues listing the technical parameters of performance values for a wide range of combustion engine vehicle and also listing corresponding existing damage parameters or damage levels. Similar, reports or catalogues for electrically powered vehicles may list technical parameters of performance values for electrical vehicles and their risk drivers. This way, for a particular vehicle the technical parameters can be allocated to the vehicle from the existing information. In case of missing information about certain parameters, damage levels or risk drivers for a particular vehicle, the forward looking modelling structure selects parameters from a combustion engine vehicle or electrically powered vehicle that has the most similar values with respect to other parameters. Thus, the forward looking modelling structure chooses the best match and allocates parameters from the matching vehicle to the vehicle in question for determining an expected damage. That means the forward looking modelling structure estimates and/or predicts and/or simulates a potential damage or risk for an electrically powered vehicle and allows for quantifying costs related to such potential damage or risk.

In one example of the automated method of the present invention, the forward looking modelling structure applies the modification factor in a linear model simulating the expected damage for the electrically powered vehicle. The modification factor defines the expected damage as a linear function of the existing damage of a combustion engine vehicle. In other examples, exponential or logarithmic models could be used depending on the correlation of measured technical values and associated damage levels.

In a preferred example of the automated method according to the present invention the method provides an automated risk-transfer technology for allocation of risk in damage replacement in electrically powered vehicles. Particularly, the method measures and/or generates a rating factor for motor own damage and/or motor third party liability assessment based on the probability of an occurrence of a physically impacting loss event to an electrically powered vehicle.

In this example, the damage level of a combustion engine vehicle indicates a risk measure of loss for said combustion engine vehicle due to a loss impacting event. At least the model make and/or the model year of the combustion engine vehicle are used as first sets of input parameters. The damage model algorithm generates a damage rating allocated to said first sets of input parameters to indicate a damage potential including potential replacement costs for said combustion engine vehicle. The damage rating can be based on the technical parameters of model make and model year, and also on further technical parameters as well as the damage level of the combustion engine vehicle. The damage rating basically corresponds to the damage factor extended by replacement costs associated to the combustion engine vehicle. It is to be noted that model/make are just names, that by itself, have no physical meaning. However, power, weight, acceleration do have physical meanings and influence the accidents, where model/make represent a given set of physical parameters.

Further, in this example the modification factor for an electrically powered vehicle indicates a risk measure of loss for said electrically powered vehicle. The second sets of input parameters at least include measurements of the model make and the model year of the electrically powered vehicle just as the first sets of input parameters for the combustion engine vehicle and may include additional performance parameters. The forward looking modelling structure, e.g. using a machine-learning structure, identifies one or more combustion engine vehicle having the same or comparable technical parameters as the electrically powered vehicle and includes the damage rating of the combustion engine vehicle into generating the modification factor that serves as the basis for determining an expected damage of the electrically powered vehicle. Thus, the replacement costs are one of the factors included in the modification factor and the expected damage of the electrically powered vehicle indicates an expected damage potential including potential replacement costs for said electrically powered vehicle. The applied machine learning structures and engine can e.g. provide the predictive model structures that consider the large masses of heterogeneous data from the different sources. As an embodiment variant, a random forest structure is applied creating multiple decision trees and merging their data to obtain the most accurate predictions. It showed to be fast and produce effective output values given sufficient training data (this embodiment variant showed an accuracy of at least 87.5 percent). In another embodiment variant, k-nearest neighbors (KNN) structure are used based on their principle of feature similarity to predict the future parameter values. The use of KNN model structures showed at least 90 percent accuracy of short-term parameter value prediction.

In a preferred example of the automated method according to the present invention the modification factor is applied to measurements of the frequency and/or severity of a motor own damage (MOD) and/or motor third party damage (MTPL) used for damage assessments of the underlying combustion engine vehicle. This way the method can be applied to MOD and/or MTLP insurance systems to determine accurate and realistic insurance conditions for electrically powered vehicles. In summary, the automated system and method can be used for automatically measuring and/or allocating risk measures of loss for a replacement cost of an electric vehicle and/or parts of the electric vehicle in that the system comprises a forward looking modelling structure for electric vehicles (FLM-EV) returning rating modification factors for MTPL and MOD for electric vehicles, in that the input to the system comprises car make and/or model year and/or rating parameters like model year and/or maximum power, and in that the output comprises modification factors that are applied on MOD or MTPL frequency, severity or expected loss for non-electric cars.

The key question is how electrically powered vehicles give raise to different risk measurand vales compared to combustion engine vehicles. One of the problems lies in the fact that the risk-transfer system (or a pricing engine) can well price a combustion engine vehicle, but not an electrically powered vehicle due to the lack of measurements of actual physical damage thereof. The inventive method and system have the advantage that they allow to rely on the plurality of actual measured parameters and pricings associated with a combustion engine vehicle risk and by applying the modification factors from the FLM-EV model of such vehicle to predict or simulate and measure the risk for an electrically powered vehicle.

The automated system according to the present invention can be based on a computer-implemented realization for measuring and/or predicting the expected damage of an at least partially electrically powered vehicle. The data storage of the system may be used to store and provide the technical parameters of the vehicles. Further, the data storage can be used to store reports or catalogues listing existing measurements of technical parameters and damage levels of combustion engine vehicles, of technical parameters and damage drivers of electrically powered vehicles, and also for any type of damage factor, damage parameters, damage ratings, and modification factors generated by the forward looking modelling structure. Advantageously, the data storage is a computer readable storage medium, as e.g. a persistent storage, providing data for the modelling the expected damage of an electrically powered vehicle to the modelling unit. Also, the data storage may e.g. be a cloud based storage medium providing the modelling data to the modelling unit using a wireless network. Preferably, the computer-readable storage medium comprises computer-executable program instructions stored thereon that when executed by a computer processor perform the method according to one of the aspects of the present invention.

In one example variant the forward looking modelling structure of the modelling unit is configured to model the expected damage and/or loss and/or replacement costs of an electrically powered vehicle by simulating a physically impacting loss event on the electrically powered vehicle in that a first damage forecasting structure for combustion engine vehicles is established from existing damages and/or loss and/or replacement costs of a plurality of combustion engine vehicles. The technical parameters of such existing damage, loss or a basis for replacement costs can be collected over long periods of time in the past and do not need to be measured in real-time. The first damage model structure is adapted by a modification factor based on the risk drivers of the electrically powered vehicle to achieve a second damage model for electrically powered vehicles. The second damage model structure is applied to the electrically powered vehicle represented by its technical parameters to simulate a potential damage and/or loss and/or replacement cost for the electrically powered vehicle. The simulation of the loss impacting event on the electrically powered vehicle allows investigation of the electrically powered vehicle without the need of having an actual physical event. The present invention is defined by the appended independent claims. Preferred embodiments are set out in the dependent claims.

### Brief Description of the Drawings

The present invention will be explained in more detail below relying on examples and with reference to these drawings in which:

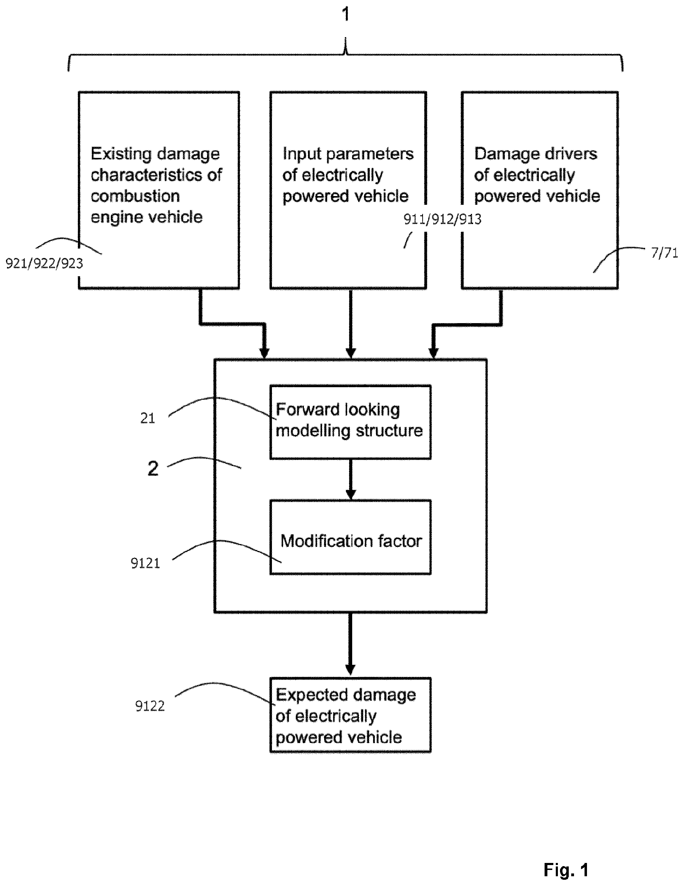

Figure 1 shows a first block diagram, schematically illustrating an automated system and method for determining an expected damage of an at least partially electrically powered vehicle based on existing damage characteristics of a combustion engine vehicle.

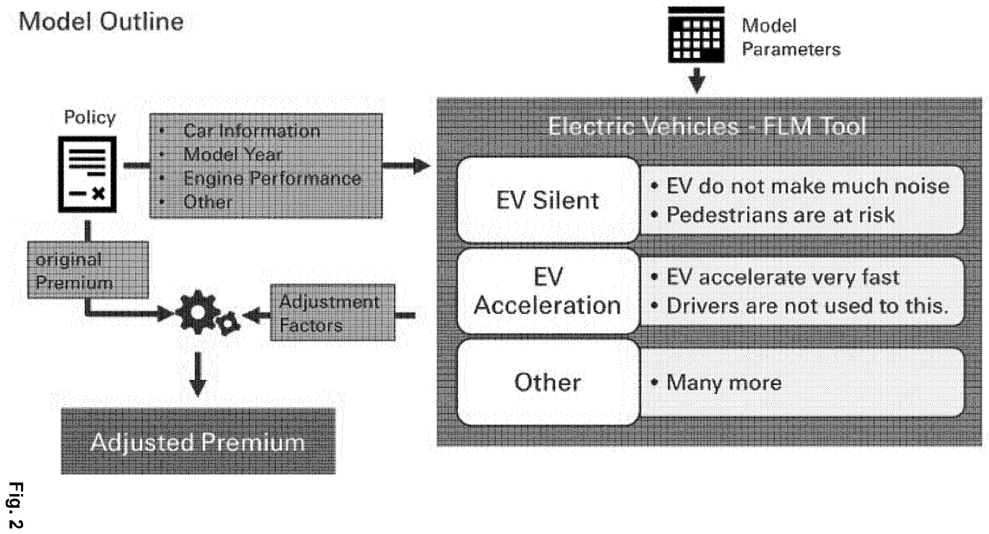

Figure 2 shows a second block diagram, schematically illustrating an automated system and method for automatically measuring and/or allocating risk measures of loss for a replacement cost of an electric vehicle and/or parts of the electric vehicle according to the invention. The invention outline of figure 1 also schematically illustrates the input and output structure of the inventive system 1.

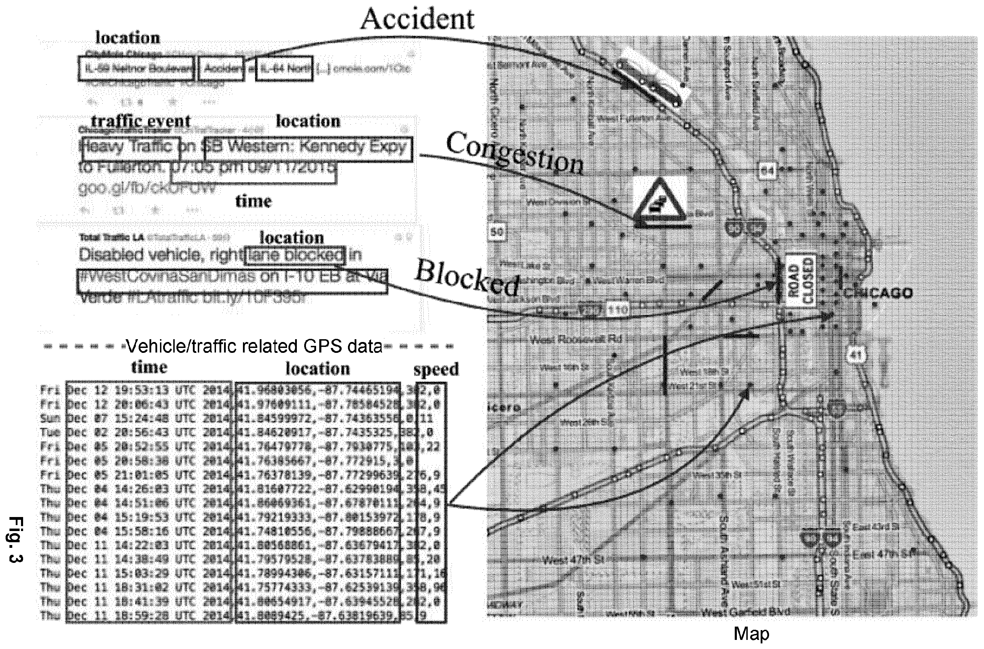

Figure 3 shows an exemplary GPS-based vehicle/traffic monitoring according to the present invention.

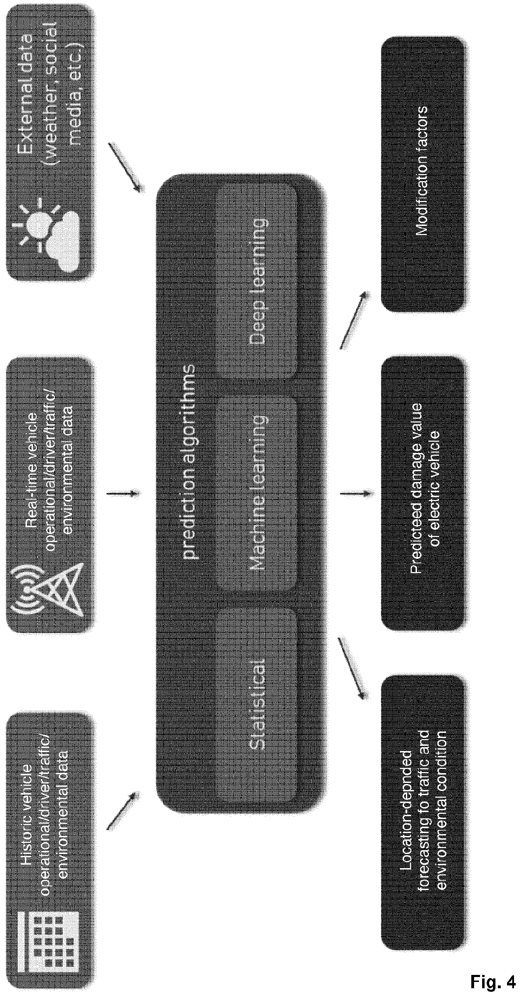

Figure 4 shows a block diagram illustrating exemplarily a possible embodiment variant of the technical approach according to the invention.

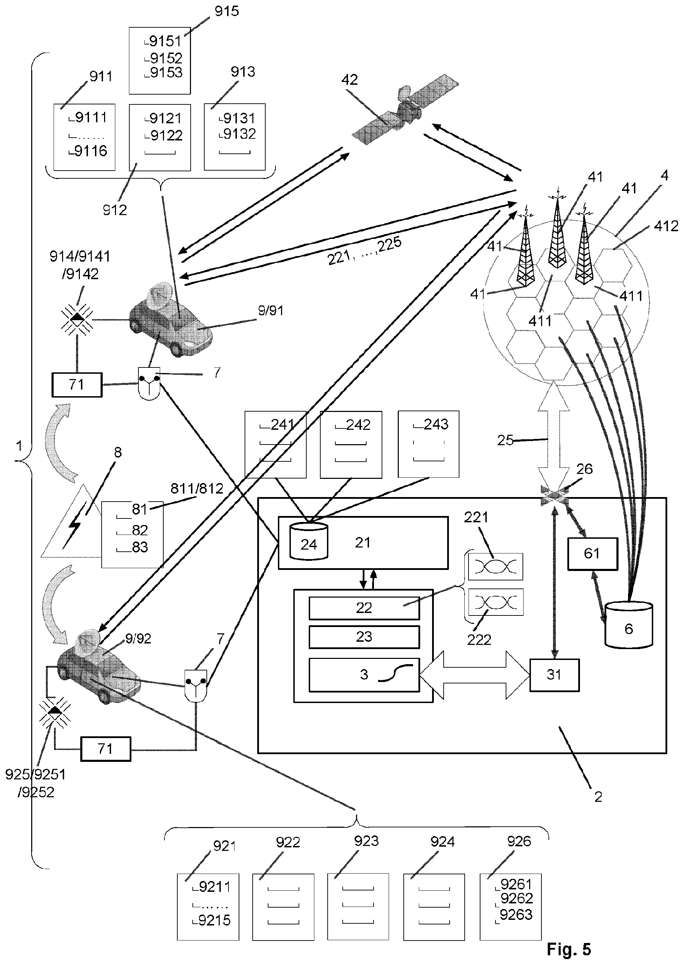

Figure 5 shows a block diagram illustrating an exemplarily automated system 1 for measuring and/or allocating probability/risk measurands for the occurrence of accident events 8 causing a damage impact 81 with a measurable impact strength 811 within a future timeframe 82 to at least partially electrically powered vehicles 9/91. First sets of input parameters 241 from combustion engine vehicles 9/92 are captured by the system 1 and transmitted to a forward looking modelling structure 21 of a prediction device 2 via a data interface 26, each first set of input parameters 241 at least comprising vehicle characteristics parameters 921 and damage impact strength 811 and/or damage characteristics parameter pattern 812 of at least one measured accident event 8 of the combustion engine vehicle 9/92. Second sets input parameters 242 are captured and transmitted to the forward looking modelling structure 21 of the prediction device 2 via a data interface 26, each second set of input parameters (242) at least comprising vehicle characteristics parameters 92 of the electrically powered vehicle 9/91. The prediction device 2 automatically generates and assigns a modification factor 9121 to at least one of the electrically powered vehicles 91 by means of the forward looking modelling structure 21 as output signaling (25) based on the first and second sets of input parameters 241/242. A vehicle-specific, aggregated damage risk measure 912 for at least one electrically powered vehicle 91 is determined and provided as output signaling 31 of a signal generator 3 based on the aggregated damage risk measures 923 of one or more combustion engine vehicle 9/92 and the modification factor 7 assigned to the at least one electrically powered vehicles 91.

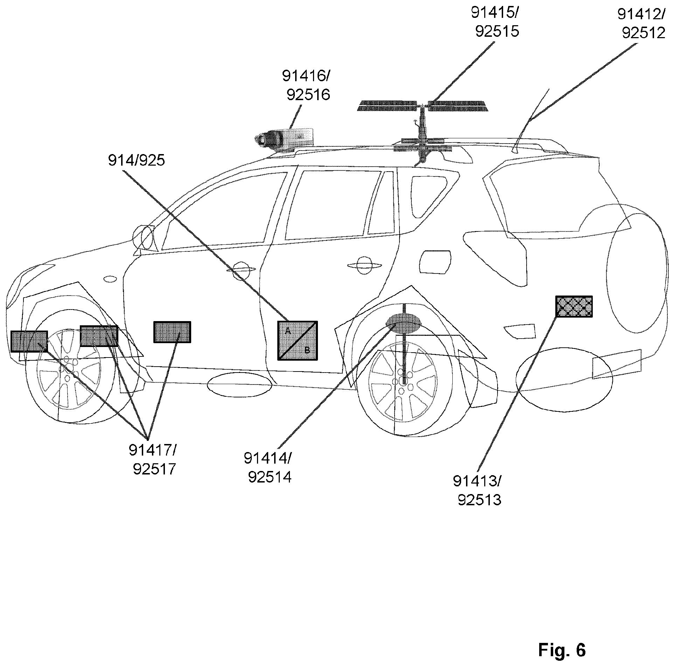

Figure 6 shows, schematically, an exemplary motor vehicle 91/92 with exemplary onboard sensors and measuring devices, i.e. the sensory data captured by exteroceptive sensors or measuring devices, the proprioceptive sensors or measuring devices, and mobile telematics devices 914/925. Related to the exteroceptive sensors or measuring devices, reference number 91412/92512 denotes a global positioning system GPS (combined with measuring data from odometers, altimeters and gyroscopes providing an accurate positioning in space), reference number 91413/92513 denotes ultrasonic sensors (measuring the position of objects very close to the motor vehicles 91/92, reference number 91414/92514 denotes odometry sensors (complementing and improving GPS information), reference number 91415/92515 a LIDAR (light detection and ranging) measuring device (monitoring the vehicle's surrounding areas, such as, e.g., roads, other vehicles, pedestrians, etc.), reference number 91416/92516 denotes video cameras (monitoring the vehicle's surrounding areas, such as, e.g., roads, other vehicles, pedestrians, etc. and reading traffic lights) and reference number 91417/92517 denotes radar sensors (monitoring the vehicle's surrounding areas, such as, e.g., roads, other vehicles, pedestrians, etc.).

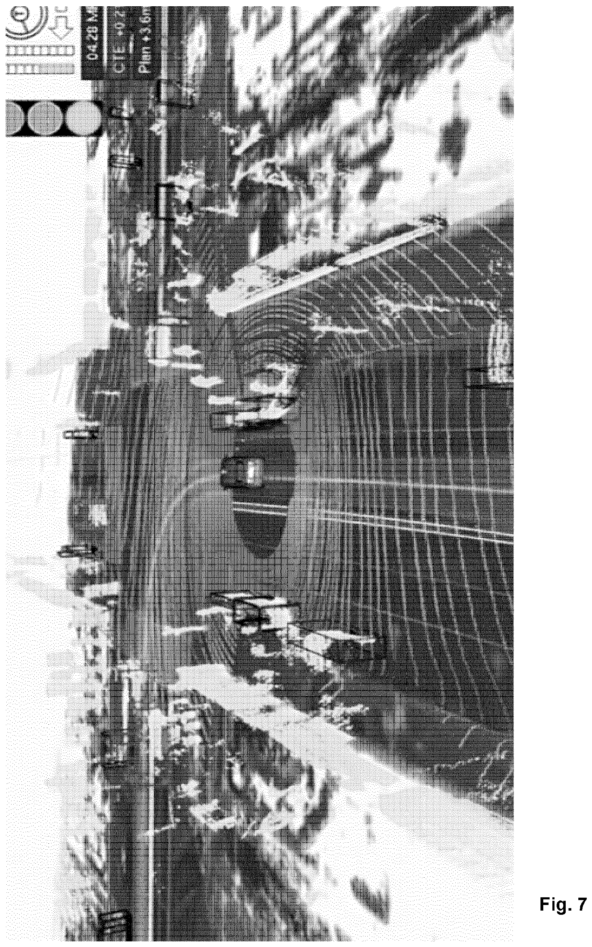

Figure 7 shows schematically in an exemplary manner a sensing of environmental parameters, at a minimum, comprising distances to objects and/or intensity of the ambient light and/or sound amplitude by means of the exteroceptive sensors or measuring devices of the motor vehicles 91/92, i.e. how a possible onboard automotive control system of the motor vehicles 91/92 interpreting the sensory data of the exteroceptive sensors or measuring devices and the proprioceptive sensors or measuring devices.

### Detailed Description of the Preferred Embodiments

Figure 1 shows a first block diagram of components of the automated system 1 and method for the automated system 1 for measuring and/or allocating probability/risk measurands for the occurrence of accident events 8 causing a damage impact 81 with a measurable impact strength 811 within a future time-frame 82 to at least partially electrically powered vehicles 9/91. Thus, figure 1 shows the automated system 1 for measuring and/or predicting an expected damage of an at least partially electrically powered vehicle based on measured damage characteristics parameter pattern of combustion engine vehicles.

First sets of input parameters 241 from combustion engine vehicles 9/92 are captured by the system 1 and transmitted to a forward looking modelling structure 21 of a prediction device 2 via a data interface 26. The prediction device 2 can e.g. be connected via a data transmission network or data transmission line 4 e.g. comprising a cellular mobile network 41 and/or a satellite transmission line 42, to telematics devices 914 and/or 925 of at least partially electrically powered vehicles 91 and/or combustion engine vehicle 925 for capturing at least partially the parameters 911/921 and the real-time measuring data 915/926. The telematic devices 914 and/or 925 can e.g. be realized using vehicle built-in sensors and telematics 9141/9251 and/or mobile phone 9142/9252 sensory data. Each first set of input parameters 241 comprises at least vehicle characteristics parameters 921 and damage impact strength 811 and/or damage characteristics parameter pattern 812 of at least one measured accident event 8 of the combustion engine vehicle 9/92. The first sets of input parameter 241 of the combustion engine vehicle 92 can e.g. at least comprise parameter values capturing maximum power capacity 9211 and/or a model year 9212 and/or a vehicle make 9213 and/or an acceleration capacity 9214 and/or a vehicle weight 9215 and/or a rating parameter 922 of the combustion engine vehicle 9/92. Additionally driver characteristics parameters 71 of one or more driver 7 can e.g. be captured by the system 1, e.g. assigned to one or more first set of input parameters 241, wherein the aggregated damage risk measure 912 for the at least partially electrically powered vehicle 91 is determined based on the one or more existing aggregated damage risk measures 923 of the one or more combustion engine vehicle 9/92, the modification factor 7, and the captured driver characteristics parameter values 71, and wherein the output signaling 31 is indicative of the aggregated damage risk measure 912 for the for the at least partially electrically powered vehicle 91 in respect to the driver 7. The first sets of input parameters 241 can e.g. at least comprise parameter values indicating the model make 924 and the year 923 of the combustion engine vehicle 9/92, wherein the damage model structure 22 generates a damage measurement allocated to said first sets of input parameters 241 providing a probability measure for the future occurrence of an aggregated damage risk measure 912 in a future time-frame 82 including potential replacement costs as aggregated loss risk measure 913 for said combustion engine vehicle 9/92.

Second sets input parameters 242 are captured by the system 1 via a data interface 5 and transmitted to the forward looking modelling structure 21 of the prediction device 2. Each second set of input parameters 242 comprises at least vehicle characteristics parameters 921 of the electrically powered vehicle 9/91. The second sets of input parameter 242 can e.g. at least comprise parameter values capturing maximum power capacity 9111 and/or a model year 9112 and/or a vehicle make 9113 and/or an acceleration capacity 9114 and/or a vehicle weight 9115 of the electrically powered vehicle 9/91. Additionally driver characteristics parameters 71 of a driver 7 can e.g. be captured by the system 1, e.g. assigned the second set of input parameters 241, wherein the aggregated damage risk measure 912 for the at least partially electrically powered vehicle 91 is determined based on the one or more existing aggregated damage risk measures 923 of the one or more combustion engine vehicle 9/92, the modification factor 7, and the captured driver characteristics parameter values 71, and wherein the output signaling 31 is indicative of the aggregated damage risk measure 912 for the for the at least partially electrically powered vehicle 91 in respect to the driver 7. The driver characteristics parameter values 71 can e.g. be at least related to a noise level 9116 and/or acceleration capacity 9114 and/or a weight 9115 of the electrically powered vehicle 9/91.

Third input parameters 243 can e.g. provide data about at least one driver 7 having a damage with a motor vehicle 9 as a damage influencing factor contributing to a damage potential of electrically powered vehicles. Such drivers 7 can be represented by measurements of a noise level, an acceleration capacity or a weight of the electrically powered vehicle. The driver 7 data 243 can for example be direct measurements by measuring devices and sensors 5/51 of the system 1 and/or provided by measurements performed by the manufacturer of the electrically powered vehicles or a third party entity and/or captured from accessible databases by means of the filter means for data based access 52.

The second input parameters can e.g. at least comprise measurements of the model make and the model year of the electrically powered vehicle, wherein the expected damage 81 of the electrically powered vehicle 9/91 provides a measure value for a probability for the occurrence of a damage including potential replacement costs for said electrically powered vehicle 9/91.

The prediction device 2 automatically generates and assigns a modification factor 9121 to at least one of the electrically powered vehicles 91 by means of the forward looking modelling structure 21 as output signaling 25 based on the first and second sets of input parameters 241/242. The forward looking modelling structure 21 can e.g. comprise a damage model structure 22 generating the aggregated damage risk measure 922 of the combustion engine vehicle 9/92. The forward looking modelling structure 21 can e.g. comprise a modification model structure 23 generating the modification factor 9171 for allocating the expected damage 81 by (i) selecting a combustion engine vehicle 9/92 comprising at least similar technical parameters as the electrically powered vehicle 9/91 and determining the aggregated damage risk measure 917 for said combustion engine vehicle 9/92, (ii) selecting a damage driver 7 for the electrically powered vehicle 9/91, and (iii) combining the aggregated damage risk measure 917 of said combustion engine vehicle 9/92 and the damage driver 7 to define the modification factor 9171.

The modification factor 9121 can e.g. provide a measure for the expected damage 81 for the electrically powered vehicle 9/91 as a linear function of the existing impact characteristics parameter pattern 812 or the aggregated damage risk measure 912 of a combustion engine vehicle 9/92. An aggregated loss risk measure 913/923 can e.g. be measured based on the aggregated damage risk measure 912of a combustion engine vehicle 9/92. For an electrically powered vehicle 9/91, an aggregated loss risk measure 913 for said electrically powered vehicle 9/91 can also e.g. be determined by the system 1 based on the modification factor 9171 and one or more aggregated loss risk measures 923.

A vehicle-specific, aggregated damage risk measure 912 for at least one electrically powered vehicle 91 is determined and provided as output signaling 31 of a signal generator 3 based on the aggregated damage risk measures 923 of one or more combustion engine vehicle 9/92 and the modification factor 7 assigned to the at least one electrically powered vehicles 91. The determined vehicle-specific, aggregated damage risk measure 912 for at least one electrically powered vehicle 91 provided as output signaling 31 of a signal generator 3 and/or the modification factor 9121 can e.g. be measured in relation to a cover 9131 defined by Motor Third Party Liability MTPL parameter values ensuring that aggregated damages to third party health and property caused by the accident events 8 of a future time-frame 82 and associated with at least one electrically powered vehicle 9/91 is covered.

Aggregated damage risk measures 923 can e.g. be generated by a damage model structure 22 and allocated to the first sets of input parameters 241, the damage risk measures 923 providing an aggregated damage probability measure values for the combustion engine vehicles 9/92 to be involved in one or more accident events 8 having a damage impact 811 with an Impact strength 811 within a future time-frame 82. The damage model structure 22 can e.g. determine the aggregated damage risk measures 923 by (i) measuring at least one vehicle characteristics parameter value 921 of maximum power capacity 9211 and/or model year 9212 vehicle make 92113 and/or acceleration capacity 9214 of a combustion engine vehicle 92, (ii) identifying one or more damage impacts 81 of said damaged combustion engine vehicle 92 associating the at least one vehicle characteristics parameter value 921 for a future time-frame 82, and (iii) aggregating the one or more damage impacts 81 for a future time-frame 82 to determine the aggregated damage risk measure 923 for the combustion engine vehicle 92.

The modification factor 9171 can e.g. be applied to measurements of a frequency 83 and/or a severity or impact strength 811 of a motor own damage MOD and/or motor third party damage MTPL of the combustion engine vehicle 9/92. Thus, the determined vehicle-specific, aggregated damage risk measure 912 for at least one electrically powered vehicle 91 provided as output signaling 31 of a signal generator 3 and/or the modification factor 9121 is measured in relation to a cover 9131 defined by Motor Own Damage (MOD) parameter values ensuring that aggregated damages comprising accident events 8 of a future time-frame 82 occurring due to fire and/or accident of the at least one electrically powered vehicle 9/91 within a future time-frame 82.

The forward looking modelling structure 61 can e.g. forecast the expected damage 81 and/or loss and/or replacement costs of an electrically powered vehicle 9/91 by simulating a physically impacting loss event on the electrically powered vehicle 9/91, wherein (i) a first damage model structure 221 for combustion engine vehicles 9/92 is established from existing damages and/or loss and/or replacement costs of a plurality of combustion engine vehicles 9/92, (ii) the first damage model structure 221 is adapted by a modification factor based on risk drivers of the electrically powered vehicle 9/91 to achieve a second damage model structure 222 for electrically powered vehicles 9/91, and (iii) the second damage model structure 222 is applied to the electrically powered vehicle 9/91 to predict a potential damage and/or loss and/or replacement cost for the electrically powered vehicle 9/91.

As mentioned, the forward looking modelling structure can comprise a modification model structure 23 generating the modification factor 9121 for allocating the expected damage. The modification model structure 23 selects a combustion engine vehicle 9/92 comprising similar or comparable technical parameters as the evaluated electrically powered vehicle and determines the damage level or damage factor for said combustion engine vehicle 9/92. Further, the modification model structure 23 selects a driver 7 for the electrically powered vehicle 9/91, that is associated to the technical parameters of the electrically powered vehicle. Then, the modification model structure 23 correlates the damage level of said combustion engine vehicle 9/92 and the damage driver 7 of the electrically powered vehicle 9/91 to define the modification factor 9121. For example, the modification factor 9121 is correlated to the damage level and the damage driver by a linear function. For example, in case parameter values of a power capacity of a series of combustion engine vehicles ranges between 300 horsepower and 500 horsepower, the modification factors 9121 for electrically powered vehicles 9/91 with equivalent power capacities will be determined to linearly increase from 0% to +20%. That means an electrically powered vehicle of 300 horsepower is determined to have the same damage potential as a combustion engine vehicle of 300 horsepower, while an electrically powered vehicle of 500 horsepower is determined to have a 20% higher damage potential as a combustion engine vehicle of 300 horsepower. Finally, the forward looking modelling structure 21 automatically generates the expected damage of the evaluated electrically powered vehicle by applying the modification factor 9121 to the existing damage level of said combustion engine vehicle 9/92 and indicates a quantified value for the expected damage.

As mentioned above the automated system and method of the present invention as able to simulate a risk of damage or loss of an electrically powered vehicle 9/91 based on quantified measures of technical parameters of combustion engine vehicles 9/92. The quantified expected damage of the electrically powered vehicle corresponds to a risk of such vehicle to get involved in a loss impacting event and to the costs such involvement will accrue. It is not necessary to provide a test series that damages electrically powered vehicles 9/91 and measures their damage levels. The method allows for deriving the risk and damage level for electrically powered vehicles from the existing damage characteristics of combustion engine vehicles 9/92.

Figure 2 illustrates an advantageous example application of the automated method according to the invention for determining an effective insurance policy for electrically powered vehicles 9/91, which defines a tariff modification system. Figure 2 schematically illustrates an architecture for the automated system and method, which automatically measures and/or allocates a risk measure of loss for a replacement cost of an electric vehicle and/or parts of the electric vehicle according to the invention. The system and method is based on the forward looking modelling structure 21 for electric vehicles (FLM-EV) which provides a new technical approach to measuring and/or allocating risk measures for electric vehicles, such as Battery Electric Vehicles of passenger and light commercial vehicles etc.

The system comprises a forward looking modelling structure for electric vehicles (FLM-EV) returning modification factors for MTPL and MOD for electric vehicles. The input to the system comprises car make and/or model year and/or rating parameters like model year and/or maximum power. The output comprises modification factors that are applied on MOD or MTPL frequency, severity or expected loss for non-electric cars.

For the technical input parameters, the method uses tool parameters and model parameters as mentioned above. The parameters can e.g. be stored in a listing file. For example, the file contains parameter values for each risk diver as modelling parameters parameter. Table 1 below is a list of such parameter data.

**Table 1: Modelling parameters**

| **Variable** | **Example** | **Explanation** | **Type** |
|---|---|---|---|
| **risk.driver** | Ev Acceleration Freq | Name of Risk Driver | String |
| **frequency.mtpl.modify** | TRUE | Area of Influence | Boolean |
| **frequency.mod.modify** | TRUE | Area of Influence | Boolean |
| **frequency.mtpl.bi.modify** | FALSE | Area of Influence | Boolean |
| **severity.mtpl.modify** | FALSE | Area of Influence | Boolean |
| **severity.mod.modify** | FALSE | Area of Influence | Boolean |
| **car.engine.type** | Electric | Electric or other engine | String |
| **parameter** | car.engine.power.hp | Name of the parameter the linear function depends on. | String |
| **start.value** | 200 | Start value of linear increase | Number |
| **end.value** | 500 | End value of linear increase | Number |
| **start.scaling.factor** | 1 | Value of linear function at start value. | Number |
| **end.scaling.factor** | 1.2 | Value of linear function at end value. | Number |

The variable indicates the evaluated parameter and a range of the model. The example indicates vehicle parameters and parameter limits. The explanation further defines application range and indicates modelling algorithms for the parameters. The type indicates the output format.

The tool parameters comprise the information about the vehicle to be insured. For example: the maximum power, the model year, etc. of the vehicle.

The make model might be used, but not mandatory. This depends on the chosen model. The damage factors or rating rates which shall be modified can be part of the tool parameters. If so, the forward looking modelling structure can directly return the adjusted rates. Otherwise, the adjustment needs to be done in some other step.

The output is a graphical representation of how the modification factors were calculated and the actual set of modification factors. The modification factors are generated for MTPL and MOD for frequency and severity.

The model is based on a set of risk drivers. A risk driver is defined as anything that measurably influences the covered loss in either frequency or severity. Each risk driver has a defined area of influence, meaning what line of business or technical field of risk cover is affected by the risk driver. The influence on the insurance loss is modelled with linear functions. For example, the frequency for MTPL and MOD shall be increased linearly from 0% to 20% in the range of 300 HP to 500 HP of the vehicles. So far, no cross correlation or other functions are applied other than linear ones. However, the linear approach could be refined in case of complex vehicle performance and damage level correlation. Maximum correction factors are currently in the range of -20% to +20% for individual ratings.

The modelling parameters were set either with data or expert judgment. Many parameters may need to be set by expert judgment, because there is currently not much loss and exposure data available for electrically powered vehicles. This can change with time and therefore more parameters can e.g. be set with data in other embodiment variants.

The system is based on an R-Project Package and the user interface is a R Shiny application, but an implementation into almost any modern programming language is possible. The output format of the system can e.g. be delivered as a listing file, such as an Excel with VBA. A direct connection/interface to some other rating tool is possible, as well as a complete inclusion of the system in some other tool framework. The tool can comprise no interfaces to databases or other. As a variant, the system, however, can comprise an interface to a MS SQL DB.

The inventive Tarif Modification system for electrically powered vehicles is able to provide users/customers with a substantial competitive advantage in terms of pricing accuracy and risk knowledge. It enables to capture and/or measure the risk impact of for example Battery Electric Vehicles (BEV) and/or hybrids PHEV (Plug-in-Hybrid) on almost all car brands present in the market, for both passenger and light commercial vehicles. The modification factor output can be designed as an insurance rating adjustment factor, capturing the impact of electrically powered vehicles compared to combustion engine vehicles in terms of insurance claims frequency and severity.

The invention comprises (i) a list of Risk Drivers (Factors that influence the insurance claims frequency or severity) capturing the difference in loss cost for BEV or hybrids PHEV (Plug-in-Hybrid) or the like; (ii) A parameterization of the Risk Drivers including the list of resources used to set the parameters; (iii) A structure that applies the Risk Drivers to a given motor policy, returning the tariff adjustment factor, (iv) Regular monitoring and update on Risk Drivers and its parameters.

The invention comprises all relevant risk drivers for electrically powered vehicles, including the source used for the parameter setting, the Area of Influence (MTPL/MOD, freq/severity) and the parameter value itself.

The invention provides a system using technical parameters of the vehicle as used in motor policy information as input and returns tariff modification factors. Table 2 shows examples for motor third party liability (MTPL) application and motor own damage (MOD) application of tariff modification factors (TMF) for the frequency and severity of an expected damage a modification for the risk premium of the insurance policy.

**Table 2: Tariff Modification Factors per vehicle based on general policy input (make/model/model year etc.).**

| Vehicle ID (make, model, version) | Frequency | Severity | Risk Premium |
|---|---|---|---|
| MTPL | TMF1 | TMF2 | TMF3 |
| MOD | TMF4 | TMF5 | TMF6 |

| | | | |
|---|---|---|---|
| *Note, that usually one either applies the model on Frequency and Severity or on Risk Premium only.* | | | |

Figure 2 shows a model outline of the inventive system applied to a vehicle insurance policy. The left side of Figure 2 illustrates the conventional parameters and components of an insurance policy for combustion engine vehicles. The policy is based on tool parameters of the vehicle like the car information, the model year and the engine performance. Based on these technical parameters the policy defines an original premium for the insurance of the combustion engine vehicle.

For determining an expected damage or an expected risk of damage for an electrically powered vehicle as basis for an insurance policy for electrically powered vehicles, these tool parameters are input to the forward looking modelling structure illustrated on the right side of Figure 2. Further, model parameters in form of risk drivers and technical tool parameters of the electrically powered vehicle are input to the forward looking modelling structure 21. The tool parameters of the combustion engine vehicle 9/92 and the electrically powered vehicle 9/91 are compared to determine the match of the vehicle performances. The risk drivers are defined by parameters of the noise level and the acceleration potential of the electrically powered vehicle. The forward looking modelling structure 21 generates a modification factor 9121 or an adjustment factor, respectively, for example as described for the method example illustrated in Figure 1. The modification factor is applied to the original premium which is based on the existing damage characteristics of the combustion engine vehicle to adapt the pricing engine and generate an adjusted premium, respectively, for the risk-transfer policy for the electrically powered vehicle 9/91.

### List of Reference Signs

1 Automated forecast and risk measuring system
2 Electronic prediction and/or modelling device or module
   21 Forward looking modelling structure
   22 Damage model structure
      221 First damage model structure
      222 Second damage model structure
   23 Modification model structure
   24 Input parameter of the prediction device
      241 First sets of input parameters
      242 Second sets of input parameters
      243 Third input parameters
   25 Output signaling of the prediction device
   26 Data interface
3 Signal generator
   31 Output signaling
4 Data transmission network or data transmission line
   41 Cellular mobile network
      411 Grid cell of the cellular mobile network
      412 Cellular grid
   42 Satellite transmission
5 Sensors and/or measuring devices and/or data access means
   51 Optical sensors
   52 Filter means for data based access
6 Data storage/persistent storage
   61 Cloud-based storage
7 Human driver and/or semi- or fully autonomous driving module
   71 Driver characteristics
8 Accident event
   81 Damage impact caused by the accident event to the motor vehicle
      811 Impact strength (severity) to the motor vehicle
      812 Impact characteristics parameter pattern of the accident event
   82 Time-frame of the occurrence of the accident event
   83 Frequency of an accident event with a certain impact strength and time-frame 9 Motor vehicle
   91 At least partially electrically powered vehicle
      911 Vehicle characteristics
         9111 Maximum power capacity
         9112 Model year
         9113 Vehicle make
         9114 Acceleration capacity
         9115 Vehicle weight
         9116 Noise level
      912 Aggregated damage risk measure
         9121 Modification factor
         9122 Predicted damage value
      913 Aggregated loss risk measure
         9131 Motor Third Party Liability (MTPL) loss measures
         9132 Motor Own Damage (MOD) loss measures
      914 Telematics
         9141 Telematic unit of vehicle
         9142 Mobile or smart phone capturing telematics data
      915 Telematics measuring data
         9151 Environmental parameter values
         9152 Driver parameter values (health/fatigue etc.)
         9153 Operational parameters of the vehicle
   92 Combustion engine vehicle
      921 Vehicle characteristics
         9211 Maximum power capacity
         9212 Model year
         9213 Vehicle make
         9214 Acceleration capacity
         9215 Vehicle weight
      922 Rating parameter
      923 Aggregated damage risk measure
      924 Aggregated loss risk measure
      925 Telematics
         9251 Telematic unit of vehicle
         9252 Mobile or smart phone capturing telematics data
      926 Telematics measuring data
         9261 Environmental parameter values
         9262 Driver parameter values (health/fatigue etc.)
         9263 Operational parameters of the vehicle

## Claims

1. Method for an automated system (1) for measuring probability measurands for the occurrence of accident events (8) causing a damage impact (81) with a measurable impact strength (811) within a future time-frame (82) for electrically powered vehicles (9/91), wherein first sets of input parameters (241) from combustion engine vehicles (9/92) are captured by the system (1) and transmitted to a forward looking modelling structure (21) of a prediction device (2) via a data interface (26), each first set of input parameters (241) at least comprising vehicle characteristics parameters (921) and driver characteristics parameters (71) of a driver (7) and damage impact strength (811) and damage characteristics parameter pattern (812) of at least one measured accident event (8) of the combustion engine vehicles (9/92), the vehicle characteristics parameters (921) at least comprising parameter values capturing maximum power capacity (9211) and a model year (9212) and a vehicle make (9213) and an acceleration capacity (9214) and a vehicle weight (9215) of the combustion engine vehicle (9/92), and the driver characteristics parameters (71) comprising at least a noise level (9116) and acceleration capacity (9114) and a weight (9115) of the electrically powered vehicle (9/91), wherein
second sets of input parameters (242) are captured by the system (1) and transmitted to the forward looking modelling structure (21) of the prediction device (2) via a data interface (26), each second set of input parameters (242) at least comprising vehicle characteristics parameters (921) of the electrically powered vehicle (9/91), and the vehicle characteristics parameters (921) at least comprising parameter values capturing maximum power capacity (9111) and a model year (9112) and a vehicle make (9113) and an acceleration capacity (9114) and a vehicle weight (9115) of the electrically powered vehicle (9/91),
wherein third sets of input parameters (243), providing driver data of at least one driver (7) having a damage with a motor vehicle (9), are captured by the system (1) by direct measurements by measuring devices and sensors (5/51) of the system (1) and transmitted to the forward looking modelling structure (21), the third sets of input parameters (243) at least comprising input parameters (243) measuring a noise level and an acceleration capacity and a weight of the electrically powered vehicle (9/91),
wherein the prediction device (2) automatically generates and assigns a modification factor (9121) to at least one of the electrically powered vehicles (91) by means of the forward looking modelling structure (21) as output signaling (25) based on the first, second, and third sets of input parameters (241/242), wherein a combustion engine vehicle (9/92) is selected by a modification model structure (23) of the forward looking modelling structure (21) having similar vehicle characteristics parameters as the at least one electrically powered vehicle (91) determining a damage level or damage factor for said combustion engine vehicle (9/92), wherein a driver (7) is selected for the electrically powered vehicle (9/91) by the modification model structure (23), and wherein the damage level of said combustion engine vehicle (9/92) and the damage driver (7) of the electrically powered vehicle (9/91) are correlated using a linear correlation function to provide the modification factor (9121), and
wherein a vehicle-specific, aggregated damage risk measure (912) for at least one electrically powered vehicle (91) is determined and provided as output signaling (31) of a signal generator (3) based on one or more existing aggregated damage risk measures (923) allocated to the first sets of input parameters (241) (923) of one or more combustion engine vehicle (9/92), the modification factor (7), and the captured driver characteristics parameter values (71) assigned to the at least one electrically powered vehicles (91).

2. Method according to claim 1, **characterized in that** the aggregated damage risk measure (912) for the at least partially electrically powered vehicle (91) is determined based on the one or more existing aggregated damage risk measures (923) of the one or more combustion engine vehicle (9/92), the modification factor (7), and the captured driver characteristics parameter values (71), and wherein the output signaling (31) is indicative of the aggregated damage risk measure (912) for the for the at least partially electrically powered vehicle (91) in respect to the driver (7).

3. Automated method according to one of the claims 1 or 2, wherein the first sets of input parameter (241) of the combustion engine vehicle (92) at least comprises parameter values capturing a rating parameter (922) of the combustion engine vehicle (9/92).

4. Automated method according to one of the claims 2 to 3, wherein aggregated damage risk measures (923) are generated by a damage model structure (22) and allocated to the first sets of input parameters (241), the damage risk measures (923) providing an aggregated damage probability measure values for the combustion engine vehicles (9/92) to be involved in one or more accident events (8) having a damage impact (811) with an Impact strength (811) within a future time-frame (82).

5. Automated method according to claim 4, wherein the damage model structure (22) determines the aggregated damage risk measures (923) by
measuring at least one vehicle characteristics parameter value (921) of maximum power capacity(9211) and/or model year (9212) vehicle make (92113) and/or acceleration capacity (9214) of a combustion engine vehicle (92),
identifying one or more damage impacts (81) of said damaged combustion engine vehicle (92) associating the at least one vehicle characteristics parameter value (921) for a future time-frame (82), and
aggregating the one or more damage impacts (81) for a future time-frame (82) to determine the aggregated damage risk measure (923) for the combustion engine vehicle (92).

6. Automated method according to one of the claims 1 to 5, wherein the forward-looking modelling structure (21) includes a damage model structure (22) generating the aggregated damage risk measure (922) of the combustion engine vehicle (9/92).

7. Automated method according to one of the claims 1 to 6, wherein the forward-looking modelling structure (21) includes a modification model structure (23) generating the modification factor (9171) for allocating the expected damage (81) by
selecting a combustion engine vehicle (9/92) comprising at least similar technical parameters as the electrically powered vehicle (9/91) and determining the aggregated damage risk measure (917) for said combustion engine vehicle (9/92),
selecting a damage driver (7) for the electrically powered vehicle (9/91), and
combining the aggregated damage risk measure (917) of said combustion engine vehicle (9/92) and the damage driver (7) to define the modification factor (9171).

8. Automated method according to one of the claims 1 to 7, wherein the modification factor (9121) provides a measure for the expected damage (81) for the electrically powered vehicle (9/91) as a linear function of the existing impact characteristics parameter pattern (812) or the aggregated damage risk measure (912) of a combustion engine vehicle (9/92).

9. Automated method according to one of the claims 1 to 8 wherein an aggregated loss risk measure (913/923) is measured based on the aggregated damage risk measure (912) of a combustion engine vehicle (9/92).

10. Automated method according to one of the claims 1 to 9 wherein the first sets of input parameters (241) at least include parameter values indicating the model make (924) and the year (923) of the combustion engine vehicle (9/92), wherein the damage model structure (22) generates a damage measurement allocated to said first sets of input parameters (241) providing a probability measure for the future occurrence of an aggregated damage risk measure (912) in a future time-frame (82) including potential replacement costs as aggregated loss risk measure (913) for said combustion engine vehicle (9/92).

11. Automated method according to one of the claims 1 to 10 wherein, for an electrically powered vehicle (9/91), an aggregated loss risk measure (913) for said electrically powered vehicle (9/91) is determined by the system 1 based on the modification factor (9171) and one or more aggregated loss risk measures (923).

12. Automated method according to one of the claims 1 to 11 wherein the second sets of input parameters at least include measurements of the model make and the model year of the electrically powered vehicle, wherein the expected damage (81) of the electrically powered vehicle (9/91) provides a measure value for a probability for the occurrence of a damage potential including potential replacement costs for said electrically powered vehicle (9/91).

13. Automated method according to one of the claims 1 to 12 wherein the modification factor (9171) is applied to measurements of a frequency (83) and/or a severity or impact strength (811) of a motor own damage (MOD) and/or motor third party damage (MTPL) of the combustion engine vehicle (9/92).

14. Automated method according to one of the claims 1 to 13 wherein the forward-looking modelling structure (21) is modelling the expected damage (81) and/or loss and/or replacement costs of an electrically powered vehicle (9/91) by measurably predicting a physically impacting loss event on the electrically powered vehicle (9/91), wherein
a first damage model structure (221) for combustion engine vehicles (9/92) is established from existing damages and/or loss and/or replacement costs of a plurality of combustion engine vehicles (9/92),
the first damage model structure (221) is adapted by a modification factor based on risk drivers of the electrically powered vehicle (9/91) to achieve a second damage model structure (222) for electrically powered vehicles (9/91), and
the second damage model structure (222) is applied to the electrically powered vehicle (9/91) to predict a potential damage and/or loss and/or replacement cost for the electrically powered vehicle (9/91).

15. Automated method according to one of the claims 1 to 14 wherein the determined vehicle-specific, aggregated damage risk measure (912) for at least one electrically powered vehicle (91) provided as output signaling (31) of a signal generator (3) and/or the modification factor (9121) is measured in relation to a cover (9131) defined by Motor Third Party Liability (MTPL) parameter values ensuring that aggregated damages to third party health and property caused by the accident events (8) of a future time-frame (82) and associated with at least one electrically powered vehicle (9/91) is covered.

16. Automated method according to one of the claims 1 to 15 wherein the determined vehicle-specific, aggregated damage risk measure (912) for at least one electrically powered vehicle (91) provided as output signaling (31) of a signal generator (3) and/or the modification factor (9121) is measured in relation to a cover (9131) defined by Motor Own Damage (MOD) parameter values ensuring that aggregated damages comprising accident events (8) of a future time-frame (82) occurring due to burning and/or theft and/or attempt to theft and/or accident of the at least one electrically powered vehicle (9/91) within a future time-frame (82).

17. Automated system (1) for measuring probability measurands for the occurrence of accident events (8) causing a damage impact (81) with a measurable impact strength (811) within a future time-frame (82) for electrically powered vehicles (9/91), wherein the system (1) comprises a data interface (26) associated with data access means (6) for capturing first sets of input parameters (241) from a combustion engine vehicles (9/92), wherein the first sets of input parameters (241)are transmitted to a forward looking modelling structure (21) of a prediction device (2), each first set of input parameters (241) at least comprising vehicle characteristics parameters (921), and driver characteristics parameters (71) of a driver (7), and impact characteristics parameter pattern (812) and a damage impact strength (811) of at least one measured accident event (8) of the combustion engine vehicle (9/92), the vehicle characteristics parameters (921) at least comprising parameter values capturing maximum power capacity (9211) and a model year (9212) and a vehicle make (9213) and an acceleration capacity (9214) and a vehicle weight (9215) of the combustion engine vehicle (9/92), and the driver characteristics parameters (71) comprising at least a noise level (9116) and acceleration capacity (9114) and a weight (9115) of the electrically powered vehicle (9/91), wherein
the automated system (1)comprises the data interface (26) associated with the data access means (6) for capturing second sets of input parameters (242) from at least partially electrically powered vehicles (9/91), wherein the second sets of input parameters (242) are transmitted to the forward looking modelling structure (21) of the prediction device (2), each second set of input parameters (242) at least comprising vehicle characteristics parameters (911) of the electrically powered vehicles (9/91), and the vehicle characteristics parameters (921) at least comprising parameter values capturing maximum power capacity (9111) and a model year (9112) and a vehicle make (9113) and an acceleration capacity (9114) and a vehicle weight (9115) of the electrically powered vehicle (9/91),
wherein third sets of input parameters (243), providing driver data of at least one driver (7) having a damage with a motor vehicle (9), are captured by the system (1) by direct measurements by measuring devices and sensors (5/51) of the system (1) and transmitted to the forward looking modelling structure (21), the third sets of input parameters (243) at least comprising input parameters (243) measuring a noise level and an acceleration capacity and a weight of the electrically powered vehicle (9/91),
wherein the system (1) comprises modification factors (9121) for each of the at least partially electrically powered vehicles (91), the modification factors (9121) being automatically generated and assigned by the prediction device (2) to the electrically powered vehicles (91) by means of the forward looking modelling structure (21) as output signaling (25) based on the first, second, and third sets of input parameters (241/242), wherein a combustion engine vehicle (9/92) is selected by a modification model structure (23) of the forward looking modelling structure (21) having similar vehicle characteristics parameters as the at least one electrically powered vehicle (91) determining a damage level or damage factor for said combustion engine vehicle (9/92), wherein a driver (7) is selected for the electrically powered vehicle (9/91) by the modification model structure (23), and wherein the damage level of said combustion engine vehicle (9/92) and the damage driver (7) of the electrically powered vehicle (9/91) are correlated using a linear correlation function to provide the modification factor (9121), and
wherein the system (1) comprises means for determining a vehicle-specific, aggregated damage risk measure (912) for each the electrically powered vehicles (91), and an output signal generator (3) providing at least one of the determined vehicle-specific, aggregated damage risk measures (912) for at least one of the electrically powered vehicles (91) based on one or more existing aggregated damage risk measures (923) allocated to the first sets of input parameters (241) of the combustion engine vehicles (9/92), the modification factor (7), and the captured driver characteristics parameter values (71) assigned to the at least one powered vehicle (91).

18. Automated system (1) according to claim 17, wherein a data storage (1) is a persistent storage storing data of accident events (8) of combustion engine vehicles (9/92) measured in the past, data of drivers (7) of combustion engine vehicles (9/92) and/or electrically powered vehicles (9/91) and/or modification factors (9171) for measuring an expected damage (81) of electrically powered vehicles (9/91) associated with a future time-frame (82) and/or an expected frequency (83) of accident events (8) with corresponding damage impacts expectedly to be measured in said future time-frame (82).

19. Automated system (1) according to one of claims 17 or 18, wherein the data storage (6) is a cloud-based storage (61).

## Patentansprüche

1. Verfahren für ein automatisiertes System (1) zur Messung von Wahrscheinlichkeitsmessgrößen für das Auftreten von Unfallereignissen (8), die einen Schadensaufprall (81) mit einer messbaren Aufprallstärke (811) verursachen, innerhalb eines zukünftigen Zeitrahmens (82) für elektrisch angetriebene Fahrzeuge (9/91), wobei erste Sätze von Eingabeparametern (241) von Verbrennungsmotorfahrzeugen (9/92) von dem System (1) erfasst und an eine vorwärtsgerichtete Modellierungsstruktur (21) einer Vorhersagevorrichtung (2) über eine Datenschnittstelle (26) übertragen werden, wobei jeder erste Satz von Eingabeparametern (241) mindestens Fahrzeugeigenschaftsparameter (921) und Fahrereigenschaftsparameter (71) eines Fahrers (7) und Schadensaufprallstärke (811) und Schadenseigenschaftsparametermuster (812) von mindestens einem gemessenen Unfallereignis (8) der Verbrennungsmotorfahrzeuge (9/92) umfasst, wobei die Fahrzeugeigenschaftsparameter (921) mindestens Parameterwerte umfassen, die eine maximale Leistungskapazität (9211) und ein Modelljahr (9212) und eine Fahrzeugmarke (9213) und eine Beschleunigungskapazität (9214) und ein Fahrzeuggewicht (9215) des Verbrennungsmotorfahrzeugs (9/92) erfassen, und die Fahrereigenschaftsparameter (71) mindestens einen Geräuschpegel (9116) und eine Beschleunigungskapazität (9114) und ein Gewicht (9115) des elektrisch angetriebenen Fahrzeugs (9/91) umfassen, **dadurch gekennzeichnet,**
**dass** zweite Sätze von Eingabeparametern (242) durch das System (1) erfasst und über eine Datenschnittstelle (26) an die vorwärtsgerichtete Modellierungsstruktur (21) der Vorhersagevorrichtung (2) übertragen werden, jeder zweite Satz von Eingabeparametern (242) mindestens Fahrzeugeigenschaftsparameter (921) des elektrisch betriebenen Fahrzeugs (9/91) umfasst, und die Fahrzeugeigenschaftsparameter (921) mindestens Parameterwerte umfassen, die eine maximale Leistungskapazität (9111) und ein Modelljahr (9112) und eine Fahrzeugmarke (9113) und eine Beschleunigungskapazität (9114) und ein Fahrzeuggewicht (9115) des elektrisch angetriebenen Fahrzeugs (9/91) erfassen,
**dass** dritte Sätze von Eingabeparametern (243), die Fahrerdaten von mindestens einem Fahrer (7) bereitstellen, der einen Schaden mit einem Kraftfahrzeug (9) aufweist, von dem System (1) durch direkte Messungen von Messvorrichtungen und Sensoren (5/51) des Systems (1) erfasst und an die vorwärtsgerichtete Modellierungsstruktur (21) übertragen werden, wobei die dritten Sätze von Eingabeparametern (243) mindestens Eingabeparameter (243) umfassen, die einen Geräuschpegel und eine Beschleunigungskapazität und ein Gewicht des elektrisch angetriebenen Fahrzeugs (9/91) messen,
**dass** die Vorhersagevorrichtung (2) automatisch einen Modifikationsfaktor (9121) erzeugt und mindestens einem der elektrisch angetriebenen Fahrzeuge (91) mittels der vorwärtsgerichteten Modellierungsstruktur (21) als Ausgabesignalisierung (25) basierend auf dem ersten, zweiten und dritten Satz von Eingabeparametern (241/242) zuweist, wobei ein Verbrennungsmotorfahrzeug (9/92) durch eine Modifikationsmodellstruktur (23) der vorwärtsgerichteten Modellierungsstruktur (21) ausgewählt wird, das ähnliche technische Parameter wie das mindestens eine elektrisch angetriebene Fahrzeug (91) aufweist, die ein Schadensniveau oder einen Schadensfaktor für das Verbrennungsmotorfahrzeug (9/92) bestimmen, wobei ein Fahrer (7) für das elektrisch angetriebene Fahrzeug (9/91) von der Modifikationsmodellstruktur (23) ausgewählt wird und wobei ein Schadensniveau des Verbrennungsmotorfahrzeugs (9/92) und des Schadensfahrers (7) des elektrisch angetriebenen Fahrzeugs 9/91 unter Verwendung einer linearen Korrelationsfunktion korreliert werden, um den Modifikationsfaktor (9121) bereitzustellen, und
**dass** ein fahrzeugspezifisches, aggregiertes Schadensrisikomaß (912) für mindestens ein elektrisch angetriebenes Fahrzeug (91) bestimmt und als Ausgabesignalisierung (31) eines Signalgenerators (3) basierend auf den aggregierten Schadensrisikomaßen (923) eines oder mehrerer Verbrennungsmotorfahrzeuge (9/92), dem Modifikationsfaktor (7) und den erfassten Fahrereigenschaftsparameterwerten (71), die dem mindestens einen elektrisch angetriebenen Fahrzeug (91) zugewiesen sind, bereitgestellt werden.

2. Verfahren nach Anspruch 1, **dadurch gekennzeichnet, dass** das aggregierte Schadensrisikomaß (912) für das mindestens teilweise elektrisch angetriebene Fahrzeug (91) basierend auf dem einen oder den mehreren bestehenden aggregierten Schadensrisikomaßen (923) des einen oder der mehreren Verbrennungsmotorfahrzeuge (9/92), dem Modifikationsfaktor (7) und den erfassten Fahrereigenschaftsparameterwerten (71) bestimmt wird, und wobei die Ausgabesignalisierung (31) das aggregierte Schadensrisikomaß (912) für das mindestens teilweise elektrisch angetriebene Fahrzeug (91) in Bezug auf den Fahrer (7) angibt.

3. Automatisiertes Verfahren nach einem der Ansprüche 1 oder 2, wobei die ersten Sätze von Eingabeparametern (241) des Verbrennungsmotorfahrzeugs (92) mindestens Parameterwerte umfassen, die einen Nennparameter (922) des Verbrennungsmotorfahrzeugs (9/92) erfassen.

4. Automatisiertes Verfahren nach einem der Ansprüche 2 bis 3, wobei aggregierte Schadensrisikomaße (923) durch eine Schadensmodellstruktur (22) erzeugt und den ersten Sätzen von Eingabeparametern (241) zugewiesen werden, wobei die Schadensrisikomaße (923) aggregierte Schadenswahrscheinlichkeitsmesswerte für die Verbrennungsmotorfahrzeuge (9/92) bereitstellen, die in ein oder mehrere Unfallereignisse (8), die einen Schadensaufprall (811) mit einer Aufprallstärke (811) aufweisen, innerhalb eines zukünftigen Zeitrahmens ( 82) involviert sein werden.

5. Automatisiertes Verfahren nach Anspruch 4, wobei die Schadensmodellstruktur (22) die aggregierten Schadensrisikomaße (923) bestimmt durch
Messen mindestens eines Fahrzeugeigenschaftsparameterwerts (921) einer maximalen Leistungskapazität (9211) und/oder eines Modelljahrs (9212), einer Fahrzeugmarke (92113) und/oder Beschleunigungskapazität (9214) eines Verbrennungsmotorfahrzeugs (92),
Identifizieren eines oder mehrerer Schadensaufpralle (81) des beschädigten Verbrennungsmotorfahrzeugs (92), Zuordnen des mindestens einen Fahrzeugeigenschaftsparameterwerts (921) für einen zukünftigen Zeitrahmen (82) und
Aggregieren der einen oder mehreren Schadensaufpralle (81) für einen zukünftigen Zeitrahmen (82), um das aggregierte Schadensrisikomaß (923) für das Verbrennungsmotorfahrzeug (92) zu bestimmen.

6. Automatisiertes Verfahren nach einem der Ansprüche 1 bis 5, wobei die vorwärtsgerichtete Modellierungsstruktur (21) eine Schadensmodellstruktur (22) einschließt, die das aggregierte Schadensrisikomaß (922) des Verbrennungsmotorfahrzeugs (9/92) erzeugt.

7. Automatisiertes Verfahren nach einem der Ansprüche 1 bis 6, wobei die vorwärtsgerichtete Modellierungsstruktur (21) eine Modifikationsmodellstruktur (23) einschließt, die den Modifikationsfaktor (9171) erzeugt, zum Zuweisen des erwarteten Schadens (81) durch
Auswählen eines Verbrennungsmotorfahrzeugs (9/92), das mindestens ähnliche technische Parameter wie das elektrisch angetriebene Fahrzeug (9/91) umfasst, und Bestimmen des aggregierten Schadensrisikomaßes (917) für das Verbrennungsmotorfahrzeug (9/92),
Auswählen eines Schadensfahrers (7) für das elektrisch angetriebene Fahrzeug (9/91) und
Kombinieren des aggregierten Schadensrisikomaßes (917) des Verbrennungsmotorfahrzeugs (9/92) und des Schadensfahrers (7), um den Modifikationsfaktor (9171) zu definieren.

8. Automatisiertes Verfahren nach einem der Ansprüche 1 bis 7, wobei der Modifikationsfaktor (9121) ein Maß für den erwarteten Schaden (81) an dem elektrisch angetriebenen Fahrzeug (9/91) als eine lineare Funktion des bestehenden Aufpralleigenschaftsparametermusters (812) oder des aggregierten Schadensrisikomaßes (912) eines Verbrennungsmotorfahrzeugs (9/92) bereitstellt.

9. Automatisiertes Verfahren nach einem der Ansprüche 1 bis 8, wobei ein aggregiertes Verlustrisikomaß (913/923) basierend auf dem aggregierten Schadensrisikomaß (912) eines Verbrennungsmotorfahrzeugs (9/92) gemessen wird.

10. Automatisiertes Verfahren nach einem der Ansprüche 1 bis 9, wobei die ersten Sätze von Eingabeparametern (241) mindestens Parameterwerte einschließen, die die Modellmarke (924) und das Jahr (923) des Verbrennungsmotorfahrzeugs (9/92) angeben, wobei die Schadensmodellstruktur (22) eine Schadensmessung erzeugt, die den ersten Sätzen von Eingabeparametern (241) zugewiesen ist, die ein Wahrscheinlichkeitsmaß für das zukünftige Auftreten eines aggregierten Schadensrisikomaßes (912) in einem zukünftigen Zeitrahmen (82) bereitstellen, einschließlich potenzieller Ersatzkosten als aggregiertes Verlustrisikomaß (913) für das Verbrennungsmotorfahrzeug (9/92).

11. Automatisiertes Verfahren nach einem der Ansprüche 1 bis 10, wobei für ein elektrisch angetriebenes Fahrzeug (9/91) ein aggregiertes Verlustrisikomaß (913) für das elektrisch angetriebene Fahrzeug (9/91) durch das System 1 basierend auf dem Modifikationsfaktor (9171) und einem oder mehreren aggregierten Verlustrisikomaßen (923) bestimmt wird.

12. Automatisiertes Verfahren nach einem der Ansprüche 1 bis 11, wobei die zweiten Sätze von Eingabeparametern mindestens Messungen der Modellmarke und des Modelljahrs des elektrisch angetriebenen Fahrzeugs einschließen, wobei der erwartete Schaden (81) des elektrisch angetriebenen Fahrzeugs (9/91) einen Messwert für eine Wahrscheinlichkeit des Auftretens eines Schadenspotentials bereitstellt, einschließlich potenzieller Ersatzkosten für das elektrisch angetriebene Fahrzeug (9/91).

13. Automatisiertes Verfahren nach einem der Ansprüche 1 bis 12, wobei der Modifikationsfaktor (9171) auf Messungen einer Frequenz (83) und/oder einer Schwere von Aufprallstärke (811) einer Fahrzeugkaskoversicherung (MOD) und/oder Fahrzeughaftpflichtversicherung (MTPL) des Verbrennungsmotorfahrzeugs (9/92) angewendet wird.

14. Automatisiertes Verfahren nach einem der Ansprüche 1 bis 13, wobei die vorwärtsgerichtete Modellierungsstruktur (21) den erwarteten Schaden (81) und/oder Verlust- und/oder Wiederbeschaffungskosten eines elektrisch angetriebenen Fahrzeugs (9/91) durch messbares Vorhersagen eines physisch auswirkenden Verlustereignisses auf das elektrisch angetriebene Fahrzeug (9/91) modelliert, wobei
eine erste Schadensmodellstruktur (221) für Verbrennungsmotorfahrzeuge (9/92) aus bestehenden Schäden und/oder Verlust- und/oder Wiederbeschaffungskosten einer Vielzahl von Verbrennungsmotorfahrzeugen (9/92) erstellt wird,
die erste Schadensmodellstruktur (221) durch einen Modifikationsfaktor basierend auf Risikofahrern des elektrisch angetriebenen Fahrzeugs (9/91) angepasst wird, um eine zweite Schadensmodellstruktur (222) für elektrisch angetriebene Fahrzeuge (9/91) zu erreichen, und
die zweite Schadensmodellstruktur (222) auf das elektrisch angetriebene Fahrzeug (9/91) angewendet wird, um einen potenziellen Schadens und/oder Verlust- und/oder Wiederbeschaffungskosten für das elektrisch angetriebene Fahrzeug (9/91) vorherzusagen.

15. Automatisiertes Verfahren nach einem der Ansprüche 1 bis 14, wobei das bestimmte fahrzeugspezifische, aggregierte Schadensrisikomaß (912) für mindestens ein elektrisch angetriebenes Fahrzeug (91), das als Ausgabesignalisierung (31) eines Signalgenerators (3) bereitgestellt wird, und/oder der Modifikationsfaktor (9121) in Bezug auf eine Deckung (9131) gemessen wird, die durch Fahrzeughaftpflichtversicherungs- (MTPL) Parameterwerte definiert ist, wobei sichergestellt wird, dass aggregierte Schäden an der Gesundheit und am Eigentum Dritter, die durch die Unfallereignisse (8) in einem zukünftigen Zeitrahmen (82) verursacht werden und mindestens einem elektrisch angetriebenen Fahrzeug (9/91) zugeordnet sind, abgedeckt sind.

16. Automatisiertes Verfahren nach einem der Ansprüche 1 bis 15, wobei das bestimmte fahrzeugspezifische, aggregierte Schadenrisikomaß (912) für mindestens ein elektrisch angetriebenes Fahrzeug (91), das als Ausgabesignalisierung (31) eines Signalgenerators (3) bereitgestellt wird, und/oder der Modifikationsfaktor (9121) in Bezug auf eine Deckung (9131) gemessen wird, die durch Kraftfahrzeugskasoversicherungs- (MOD) Parameterwerte definiert ist, die sicherstellen, dass aggregierte Schäden Unfallereignisse (8) eines zukünftigen Zeitrahmens (82) umfassen, die auf Brand und/oder Diebstahl und/oder Diebstahlversuch und/oder Unfall des mindestens einen elektrisch angetriebenen Fahrzeugs (9/91) innerhalb eines zukünftigen Zeitrahmens (82) zurückzuführen sind.

17. Automatisiertes System (1) zum Messen von Wahrscheinlichkeitsmessgrößen für das Auftreten von Unfallereignissen (8), die einen Schadensaufprall (81) mit einer messbaren Aufprallstärke (811) verursachen, innerhalb eines zukünftigen Zeitrahmens (82) für elektrisch angetriebene Fahrzeuge (9/91), wobei das System (1) eine Datenschnittstelle (26) umfasst, die Datenzugriffsmitteln (6) zugeordnet ist, um erste Sätze von Eingabeparametern (241) von Verbrennungsmotorfahrzeugen (9/92) zu erfassen, wobei die ersten Sätze von Eingabeparametern (241) an eine vorwärtsgerichtete Modellierungsstruktur (21) einer Vorhersagevorrichtung (2) übertragen werden, wobei jeder erste Satz von Eingabeparametern (241) mindestens Fahrzeugeigenschaftsparameter (921) und Fahrereigenschaftsparameter (71) eines Fahrers (7) und Aufpralleigenschaftsparametermusters (812) und einer Schadensaufprallstärke (811) von mindestens einem gemessenen Unfallereignis (8) des Verbrennungsmotorfahrzeugs (9/92) umfasst, wobei die Fahrzeugeigenschaftsparameter (921) mindestens Parameterwerte umfassen, die eine maximale Leistungskapazität (9211) und ein Modelljahr (9212) und eine Fahrzeugmarke (9213) und eine Beschleunigungskapazität (9214) und ein Fahrzeuggewicht (9215) des Verbrennungsmotorfahrzeugs (9/92) erfassen, und die Fahrereigenschaftsparameter (71) mindestens einen Geräuschpegel (9116) und eine Beschleunigungskapazität (9114) und ein Gewicht ( 9115) des elektrisch angetriebenen Fahrzeugs (9/91) umfassen, **dadurch gekennzeichnet,**
**dass** das automatisierte System (1) die Datenschnittstelle (26) umfasst, die den Datenzugriffsmitteln (6) zugeordnet ist, um zweite Sätze von Eingabeparametern (242) von mindestens teilweise elektrisch angetriebenen Fahrzeugen (9/91) zu erfassen, wobei die zweite Sätze von Eingabeparametern (242) an die vorwärtsgerichtete Modellierungsstruktur (21) der Vorhersagevorrichtung (2) übertragen werden, jeder zweite Satz von Eingabeparametern (242) mindestens Fahrzeugeigenschaftsparameter (911) der elektrisch betriebenen Fahrzeuge (9/91) umfasst, und die Fahrzeugeigenschaftsparameter (921) mindestens Parameterwerte umfassen, die eine maximale Leistungskapazität (9111) und ein Modelljahr (9112) und eine Fahrzeugmarke (9113) und eine Beschleunigungskapazität (9114) und ein Fahrzeuggewicht (9115) des elektrisch angetriebenen Fahrzeugs (9/91) erfassen,
**dass** dritte Sätze von Eingabeparametern (243), die Fahrerdaten von mindestens einem Fahrer (7) bereitstellen, der einen Schaden mit einem Kraftfahrzeug (9) aufweist, von dem System (1) durch direkte Messungen von Messvorrichtungen und Sensoren (5/51) des Systems (1) erfasst und an die vorwärtsgerichtete Modellierungsstruktur (21) übertragen werden, wobei die dritten Sätze von Eingabeparametern (243) mindestens Eingabeparameter (243) umfassen, die einen Geräuschpegel und eine Beschleunigungskapazität und ein Gewicht des elektrisch angetriebenen Fahrzeugs (9/91) messen,
**dass** das System (1) Modifikationsfaktoren (9121) für jedes der mindestens teilweise elektrisch angetriebenen Fahrzeuge (91) umfasst, die Modifikationsfaktoren (9121) automatisch erzeugt und von der Vorhersagevorrichtung (2) den elektrisch angetriebenen Fahrzeugen (91) mittels der vorwärtsgerichteten Modellierungsstruktur (21) als Ausgabesignalisierung (25) basierend auf dem ersten, zweiten und dritten Satz von Eingabeparametern (241/242) zugewiesen werden, wobei ein Verbrennungsmotorfahrzeug (9/92) durch eine Modifikationsmodellstruktur (23) der vorwärtsgerichteten Modellierungsstruktur (21) ausgewählt wird, das ähnliche technische Parameter wie das mindestens eine elektrisch angetriebene Fahrzeug (91) aufweist, die ein Schadensniveau oder einen Schadensfaktor für das Verbrennungsmotorfahrzeug (9/92) bestimmen, wobei ein Fahrer (7) für das elektrisch angetriebene Fahrzeug (9/91) von der Modifikationsmodellstruktur (23) ausgewählt wird und wobei ein Schadensniveau des Verbrennungsmotorfahrzeugs (9/92) und des Schadensfahrers (7) des elektrisch angetriebenen Fahrzeugs 9/91 unter Verwendung einer linearen Korrelationsfunktion korreliert werden, um den Modifikationsfaktor (9121) bereitzustellen, und
**dass** das System (1) Mittel zum Bestimmen eines fahrzeugspezifischen, aggregierten Schadensrisikomaßes (912) für jedes der elektrisch angetriebenen Fahrzeuge (91) umfasst, und einen Ausgabesignalgenerator (3), der mindestens eines der bestimmten Fahrzeug- spezifischer, aggregierter Schadensrisikomaße (912) für mindestens eines der elektrisch angetriebenen Fahrzeuge (91) basierend auf eines oder mehrerer bestehender aggregierter Schadensrisikomaße (923) der Verbrennungsmotorfahrzeuge (9/92) umfasst, der Modifikationsfaktor (7 ) und die erfassten Fahrereigenschafts-Parameterwerte (71) dem mindestens einen angetriebenen Fahrzeug (91) zugewiesen werden.

18. Automatisiertes System (1) nach Anspruch 17, wobei ein Datenspeicher (1) ein dauerhafter Speicher ist, der Daten von in der Vergangenheit gemessenen Unfallereignissen (8) von Verbrennungsmotorfahrzeugen (9/92), Daten von Fahrern (7) von Verbrennungsmotorfahrzeugen (9/92) und/oder elektrisch angetriebenen Fahrzeugen (9/91) und/oder Modifikationsfaktoren (9171) speichert, um einen erwarteten Schaden (81) an elektrisch angetriebenen Fahrzeugen (9/91) zu messen, der einem zukünftigen Zeitrahmen (82) und/oder einer erwarteten Häufigkeit (83) von Unfallereignissen (8) mit entsprechenden Schadensaufprallen, die voraussichtlich in dem zukünftigen Zeitrahmen (82) zu messen sind, zugeordnet ist.

19. Automatisiertes System (1) nach einem der Ansprüche 17 oder 18, wobei der Datenspeicher (6) ein cloudbasierter Speicher (61) ist.

## Revendications

1. Procédé pour un système automatisé (1) pour mesurer les grandeurs mesurables de probabilité pour l'occurrence d'événements d'accidentels (8) provoquant un impact dommageable (81) avec une résistance à l'impact mesurable (811) dans une période future (82) pour les véhicules à propulsion électrique (9/91), dans lequel les premiers ensembles de paramètres d'entrée (241) de véhicules à moteur à combustion (9/92) sont capturés par le système (1) et transmis à une structure de modélisation prospective (21) d'un dispositif de prédiction (2) via une interface de données (26), chaque premier ensemble de paramètres d'entrée (241) comprend au moins des paramètres de caractéristiques du véhicule (921) et des paramètres de caractéristiques du conducteur (71) d'un conducteur (7) et la résistance à l'impact dommageable (811) et le modèle de paramètres de caractéristiques de dommages (812) d'au moins un événement accidentel mesuré (8) des véhicules à moteur à combustion (9/92), les paramètres de caractéristiques du véhicule (921) comprennent au moins des valeurs de paramètres capturant la capacité de puissance maximale (9211) et l'année du modèle (9212) et la marque du véhicule (9213) et une capacité d'accélération (9214) et un poids du véhicule (9215) du véhicule à moteur à combustion (9/92), et les paramètres de caractéristiques du conducteur (71) comprenant au moins un niveau de bruit (9116) et une capacité d'accélération (9114) et un poids (9115) du véhicule à propulsion électrique (9/91), **caractérisé**
**en ce que** des seconds ensembles de paramètres d'entrée (242) sont capturés par le système (1) et transmis à la structure de modélisation prospective (21) du dispositif de prédiction (2) par le biais d'une interface de données (26), chaque second ensemble de paramètres d'entrée (242) comprenant au moins des paramètres de caractéristiques du véhicule (921) du véhicule à propulsion électrique (9/91), et les paramètres de caractéristiques du véhicule (921) comprenant au moins des valeurs de paramètres capturant la capacité de puissance maximale (9111) et l'année du modèle (9112) et une marque de véhicule (9113) et une capacité d'accélération (9114) et un poids du véhicule (9115) du véhicule à propulsion électrique (9/91),
**en ce que** les troisièmes ensembles de paramètres d'entrée (243), fournissant des données de conducteur d'au moins un conducteur (7) ayant subi un dommage avec un véhicule à moteur (9), sont capturés par le système (1) par des mesures directes effectuées par des dispositifs de mesure et des capteurs (5/51) du système (1) et transmis à la structure de modélisation prospective (21), les troisièmes ensembles de paramètres d'entrée (243) comprenant au moins des paramètres d'entrée (243) mesurant un niveau de bruit et une capacité d'accélération et un poids du véhicule à propulsion électrique (9/91),
**en ce que** le dispositif de prédiction (2) génère et attribue automatiquement un facteur de modification (9121) à au moins un des véhicules à propulsion électrique (91) au moyen de la structure de modélisation prospective (21) comme signal de sortie (25) sur la base du premier, deuxième et troisième ensembles de paramètres d'entrée (241/242), dans lequel un véhicule à moteur à combustion (9/92) est sélectionné par une structure de modèle de modification (23) de la structure de modélisation prospective (21) ayant des paramètres techniques similaires à ceux d'au moins un véhicule à propulsion électrique (91), déterminant un niveau de dommage ou un facteur de dommage pour ledit véhicule à moteur à combustion (9/92), dans lequel un conducteur (7) est sélectionné pour le véhicule à propulsion électrique (9/91) par la structure de modèle de modification (23), et dans lequel le niveau de dommage dudit véhicule à moteur à combustion (9/92) et le conducteur de dommage (7) du véhicule à propulsion électrique (9/91) est corrélé en utilisant une fonction de corrélation linéaire pour fournir le facteur de modification (9121), et
**en ce qu'**une mesure de risque de dommage agrégée spécifique au véhicule (912) pour au moins un véhicule à propulsion électrique (91) est déterminée et fournie en tant que signalisation de sortie (31) d'un générateur de signaux (3) basé sur des mesures de risque de dommage agrégées (923) d'un ou plusieurs véhicules à moteur à combustion (9/92), du facteur de modification (7), et des valeurs de paramètres de caractéristiques de conducteur capturées (71) attribuées au moins à un véhicule à propulsion électrique (91).

2. Procédé selon la revendication 1, **caractérisé en ce que** la mesure de risque de dommage agrégée (912) pour le véhicule au moins partiellement à propulsion électrique (91) est déterminée sur la base d'une ou plusieurs mesures de risque de dommage agrégées existantes (923) du ou des plusieurs véhicules à moteur à combustion (9/92), du facteur de modification (7), et des valeurs de paramètre de caractéristiques de conducteur capturées (71), et dans lequel la signalisation de sortie (31) est indicative de la mesure de risque de dommage agrégée (912) pour le véhicule au moins partiellement à propulsion électrique (91) par rapport au conducteur (7).

3. Procédé automatisé selon l'une des revendications 1 ou 2, dans lequel les premiers ensembles de paramètres d'entrée (241) du véhicule à moteur à combustion (92) comprennent au moins des valeurs de paramètres capturant un paramètre de notation (922) du véhicule à moteur à combustion (9/92).

4. Procédé automatisé selon l'une quelconque des revendications 2 à 3, dans lequel des mesures de risque de dommage agrégées (923) sont générées par une structure de modèle de dommage (22) et attribuées aux premiers ensembles de paramètres d'entrée (241), les mesures de risque de dommage (923) fournissant des valeurs de mesure de probabilité de dommage agrégées pour les véhicules à moteur à combustion (9/92) devant être impliqués dans un ou plusieurs événements d'accident (8) ayant un impact de dommage (811) avec une force d'impact (811) dans une période future (82).

5. Procédé automatisé selon la revendication 4, dans lequel la structure de modèle de dommage (22) détermine les mesures de risque de dommage agrégées (923) en
mesurant au moins une valeur de paramètre caractéristique du véhicule (921) de capacité de puissance maximale (9211) et/ou de l'année du modèle (9212) la marque du véhicule (92113) et/ou de la capacité d'accélération (9214) d'un véhicule à moteur à combustion (92),
identifiant un ou plusieurs impacts de dommages (81) dudit véhicule à moteur à combustion endommagé (92) en associant la ou les valeurs de paramètre de caractéristiques du véhicule (921) pour une période future (82), et
agrégeant un ou plusieurs impacts de dommages (81) pour une période future (82) pour déterminer la mesure de risque de dommages agrégée (923) pour le véhicule à moteur à combustion (92).

6. Procédé automatisé selon l'une quelconque des revendications 1 à 5, dans lequel la structure de modélisation prospective (21) comprend une structure de modèle de dommage (22) générant la mesure de risque de dommage agrégée (922) du véhicule à moteur à combustion (9/92).

7. Procédé automatisé selon l'une quelconque des revendications 1 à 6, dans lequel la structure de modélisation prospective (21) comprend une structure de modèle de modification (23) générant le facteur de modification (9171) pour attribuer le dommage attendu (81) en
sélectionnant un véhicule à moteur à combustion (9/92) comprenant au moins des paramètres techniques similaires à ceux du véhicule à propulsion électrique (9/91) et déterminer la mesure du risque de dommage agrégé (917) pour ledit véhicule à moteur à combustion (9/92),
sélectionnant un conducteur de dommages (7) pour le véhicule à propulsion électrique (9/91), et
en combinant la mesure de risque de dommage agrégée (917) dudit véhicule à moteur à combustion (9/92) et le conducteur de dommage (7) pour définir le facteur de modification (9171).

8. Procédé automatisé selon l'une quelconque des revendications 1 à 7, dans lequel le facteur de modification (9121) fournit une mesure du dommage attendu (81) pour le véhicule à propulsion électrique (9/91) en tant que fonction linéaire du modèle de paramètres de caractéristiques d'impact existant (812) ou de la mesure de risque de dommage agrégée (912) d'un véhicule à moteur à combustion (9/92).

9. Procédé automatisé selon l'une quelconque des revendications 1 à 8, dans lequel une mesure de risque de perte agrégée (913/923) est mesurée sur la base de la mesure de risque de dommage agrégée (912) d'un véhicule à moteur à combustion (9/92).

10. Procédé automatisé selon l'une quelconque des revendications 1 à 9, dans lequel les premiers ensembles de paramètres d'entrée (241) comprennent au moins des valeurs de paramètres indiquant la marque du modèle (924) et l'année (923) du véhicule à moteur à combustion (9/92), dans lequel la structure du modèle de dommage (22) génère une mesure de dommage attribuée auxdits premiers ensembles de paramètres d'entrée (241) fournissant une mesure de probabilité pour l'occurrence future d'une mesure de risque de dommage agrégée (912) dans une période future (82) comprenant des coûts de remplacement potentiels en tant que mesure de risque de perte agrégée (913) pour ledit véhicule à moteur à combustion (9/92).

11. Procédé automatisé selon l'une quelconque des revendications 1 à 10, dans lequel, pour un véhicule à propulsion électrique (9/91), une mesure de risque de perte agrégée (913) pour ledit véhicule à propulsion électrique (9/91) est déterminée par le système 1 sur la base du facteur de modification (9171) et d'une ou plusieurs mesures de risque de perte agrégées (923).

12. Procédé automatisé selon l'une quelconque des revendications 1 à 11, dans lequel les seconds ensembles de paramètres d'entrée comprennent au moins des mesures de la marque du modèle et de l'année du modèle du véhicule à propulsion électrique, dans lequel le dommage attendu (81) du véhicule à propulsion électrique (9/91) fournis une valeur de mesure pour une probabilité d'occurrence d'un potentiel de dommage incluant des coûts de remplacement potentiels pour ledit véhicule à propulsion électrique (9/91).

13. Procédé automatisé selon l'une quelconque des revendications 1 à 12, dans lequel le facteur de modification (9171) est appliqué à des mesures d'une fréquence (83) et/ou d'une gravité ou d'une résistance aux chocs (811) d'un dommage propre au moteur (MOD) et/ou d'un dommage à un tiers du moteur (MTPL) du véhicule à moteur à combustion (9/92).

14. Procédé automatisé selon l'une quelconque des revendications 1 à 13, dans lequel la structure de modélisation prospective (21) modélise les dommages attendus (81) et/ou les pertes et/ou les coûts de remplacement d'un véhicule à propulsion électrique (9/91) en prédisant de manière mesurable un événement de perte ayant un impact physique sur le véhicule à propulsion électrique (9/91), dans lequel
une première structure de modèle de dommage (221) pour véhicules à moteur à combustion (9/92) est établie à partir des dommages existantes et/ou des pertes et/ou des coûts de remplacement d'une pluralité de véhicules à moteur à combustion (9/92),
la première structure de modèle de dommage (221) est adaptée par un facteur de modification basé sur les conducteurs à risque du véhicule à propulsion électrique (9/91) pour obtenir une seconde structure de modèle de dommage (222) pour les véhicules à propulsion électriques (9/91), et
la seconde structure de modèle de dommage (222) est appliquée au véhicule à propulsion électrique (9/91) pour prédire un dommage potentiel et/ou une perte et/ou un coût de remplacement pour le véhicule à propulsion électrique (9/91).

15. Procédé automatisé selon l'une quelconque des revendications 1 à 14, dans lequel la mesure déterminée de risque de dommage agrégée spécifique au véhicule (912) pour au moins un véhicule à propulsion électrique (91) fournie comme signalisation de sortie (31) d'un générateur de signaux (3) et/ou le facteur de modification (9121) est mesurée par rapport à une couverture (9131) définie par des valeurs de paramètres de responsabilité civile automobile (MTPL) garantissant que les dommages agrégés à la santé et aux biens de tiers causés par les événements d'accident (8) d'une période future (82) et associés à au moins un véhicule à propulsion électrique (9/91) sont couverts.

16. Procédé automatisé selon l'une quelconque des revendications 1 à 15, dans lequel la mesure de risque de dommage agrégée spécifique au véhicule (912) déterminée pour au moins un véhicule à propulsion électrique (91) fournie comme signalisation de sortie (31) d'un générateur de signaux (3) et/ou le facteur de modification (9121) est mesurée par rapport à une couverture (9131) définie par des valeurs de paramètre de dommage propre au moteur (MOD) garantissant que des dommages agrégés comprenant des événements d'accident (8) d'une période future (82) survenant en raison d'un incendie et/ou d'un vol et/ou d'une tentative de vol et/ou d'un accident du ou des véhicules à propulsion électrique (9/91) dans une période future (82).

17. Système automatisé (1) pour mesurer les probabilités mesurables pour l'occurrence d'événements d'accidentels (8) provoquant un impact dommageable (81) avec une résistance à l'impact mesurable (811) dans une période future (82) pour véhicules électriques (9/91), dans lequel le système (1) comprend une interface de données (26) associée à un moyen d'accès aux données (6) pour capturer des premiers ensembles de paramètres d'entrée (241) provenant de véhicules à moteur à combustion (9/92), dans lequel les premiers ensembles de paramètres d'entrée (241) sont transmis à une structure de modélisation prospective (21) d'un dispositif de prédiction (2), chaque premier ensemble de paramètres d'entrée (241) comprend au moins des paramètres de caractéristiques du véhicule (921), des paramètres de caractéristiques du conducteur (71) d'un conducteur (7), et un modèle de paramètres de caractéristiques d'impact (812) et une résistance à l'impact dommageable (811) d'au moins un événement accidentel mesuré (8) du véhicule à moteur à combustion (9/92), les paramètres de caractéristiques du véhicule (921) comprennent au moins des valeurs de paramètres capturant la capacité de puissance maximale (9211) et une année modèle (9212) et une marque de véhicule (9213) et une capacité d'accélération (9214) et un poids de véhicule (9215) du véhicule à moteur à combustion (9/92), et les paramètres de caractéristiques du conducteur (71) comprenant au moins un niveau de bruit (9116) et une capacité d'accélération (9114) et un poids (9115) du véhicule à propulsion électrique (9/91), **caractérisé**
**en ce que** le système automatisé (1) comprend une interface de données (26) associée à un moyen d'accès aux données (6) pour capturer des seconds ensembles de paramètres d'entrée (242) provenant de véhicules au moins partiellement à propulsion électriques (9/91), dans lequel les seconds ensembles de paramètres d'entrée (242) sont transmis à la structure de modélisation prospective (21) du dispositif de prédiction (2), chaque second ensemble de paramètres d'entrée (242) comprenant au moins des paramètres caractéristiques (911) des véhicules à propulsion électrique (9/91), et les paramètres caractéristiques du véhicule (921) comprenant au moins des valeurs de paramètres capturant la capacité maximale de puissance (9111) et l'année du modèle (9112), la marque du véhicule (9113), la capacité d'accélération (9114) et le poids du véhicule (9115) du véhicule à propulsion électrique (9/91),
**en ce que** des troisièmes ensembles de paramètres d'entrée (243), fournissant des données de conducteur d'au moins un conducteur (7) ayant subi un dommage avec un véhicule à moteur (9), sont capturés par le système (1) par des mesures directes effectuées par des dispositifs de mesure et des capteurs (5/51) du système (1) et transmis à la structure de modélisation prospective (21), les troisièmes ensembles de paramètres d'entrée (243) comprenant au moins des paramètres d'entrée (243) mesurant un niveau de bruit et une capacité d'accélération et un poids du véhicule à propulsion électrique (9/91),
**en ce que** le système (1) comprend des facteurs de modification (9121) pour chacun des véhicules au moins partiellement à propulsion électriques (91), ces facteurs de modification (9121) étant générés automatiquement et attribués par le dispositif de prédiction (2) aux véhicules à propulsion électriques (91) au moyen de la structure de modélisation prospective (21) en tant que signalisation de sortie (25) sur la base des premier, deuxième et troisième ensembles de paramètres d'entrée (241/242), dans lequel un véhicule à moteur à combustion (9/92) est sélectionné par une structure de modèle de modification (23) de la structure de modélisation prospective (21) présentant des paramètres techniques similaires à ceux du ou des véhicules à propulsion électriques (91), déterminant un niveau de dommage ou un facteur de dommage pour ledit véhicule à moteur à combustion (9/92), dans lequel un conducteur (7) est sélectionné pour le véhicule à propulsion électrique (9/91) par la structure de modèle de modification (23), et dans lequel le niveau de dommage dudit véhicule à moteur à combustion (9/92) et le conducteur de dommage (7) du véhicule à propulsion électrique (9/91) sont corrélés en utilisant une corrélation linéaire d'une fonction afin de fournir le facteur de modification (9121), et
**en ce que** le système (1) comprend des moyens pour déterminer une mesure de risque de dommage agrégée spécifique au véhicule (912) pour chacun des véhicules à propulsion électrique (91), et un générateur de signal de sortie (3) fournissant au moins une des mesures de risque de dommage agrégées spécifiques au véhicule déterminées (912) pour au moins un des véhicules à propulsion électrique (91) sur la base d'une ou plusieurs mesures de risque de dommage agrégées existantes (923) des véhicules à moteur à combustion (9/92), du facteur de modification (7) et des valeurs de paramètre de caractéristiques de conducteur capturées (71) attribuées au moins à un véhicule à propulsion électrique (91).

18. Système automatisé (1) selon la revendication 17, dans lequel une stockage de données (1) est une stockage persistante stockant des données d'événements d'accident (8) de véhicules à moteur à combustion (9/92) mesurés dans le passé, des données de conducteurs (7) de véhicules à moteur à combustion (9/92) et/ou de véhicules à propulsion électrique (9/91) et/ou des facteurs de modification (9171) pour mesurer un dommage attendu (81) de véhicules à propulsion électrique (9/91) associé à une période future (82) et/ou une fréquence attendue (83) d'événements d'accident (8) avec des impacts dommageables correspondants devant être mesurés dans ladite période future (82).

19. Système automatisé (1) selon l'une des revendications 17 ou 18, dans lequel le stockage de données (6) est un stockage basé sur le cloud (61).
